(19) Europäisches Patentamt / European Patent Office / Office européen des brevets

(11) EP 1 044 364 B1

(12) **EUROPEAN PATENT SPECIFICATION**

(45) Date of publication and mention of the grant of the patent:
**13.06.2007 Bulletin 2007/24**

(21) Application number: **98966876.9**

(22) Date of filing: **14.12.1998**

(51) Int Cl.:
***G01N 24/08*** *(2006.01)*

(86) International application number:
**PCT/US1998/026512**

(87) International publication number:
**WO 1999/031491 (24.06.1999 Gazette 1999/25)**

# (54) METHOD FOR THE QUANTIFICATION OF SOLID-PHASE REACTIONS USING FLUORINE NMR

VERFAHREN ZUR QUANTIFIZIERUNG VON REAKTIONEN IN DER FESTPHASE UNTER VERWENDUNG VON FLUOR NMR

PROCEDE POUR L'EVALUATION DE REACTIONS EN PHASE SOLIDE UTILISANT LA RNM AU FLUOR

(84) Designated Contracting States:
**AT BE CH CY DE DK ES FI FR GB GR IE IT LI LU MC NL PT SE**
Designated Extension States:
**RO SI**

(30) Priority: **17.12.1997 WOPCT/US97/23920**
**24.06.1998 US 90563 P**
**24.06.1998 US 90558 P**

(43) Date of publication of application:
**18.10.2000 Bulletin 2000/42**

(73) Proprietor: **Aventis Pharmaceuticals Products Inc.**
**Collegeville, PA 19426-0997 (US)**

(72) Inventors:
- **NAGULAPALLI, Vasant, K.**
  **Blue Bell, PA 19422 (US)**
- **ORTON, Edward**
  **Lansdale, PA 19446 (US)**
- **AIREY, John, E.**
  **East Norriton, PA 19403 (US)**
- **KROLIKOWSKI, Paul, H.**
  **Harleysville, PA 19438 (US)**

(74) Representative: **Jones, Stephen Anthony**
**AdamsonJones**
**BioCity Nottingham**
**Pennyfoot Street**
**Nottingham NG1 1GF (GB)**

(56) References cited:
**WO-A-97/03931** **WO-A1-98/11036**
**US-A- 5 565 324**

- **MANATT S L ET AL.: "A fluorine-19 NMR approach for studying Merrifiled solid-phase peptide syntheses" TETRAHEDRON LETTERS, ELSEVIER SCIENCE PUBLISHERS, AMSTERDAM, NL, vol. 21, 1980, pages 1397-1400, XP002291202**
- **STONES D ET AL: "A Method for the Quantification of Resin Loading Using 19F Gel Phase NMR Spectroscopy and a New Method For Benzyl Ether Linker Cleavage in Solid Phase Chemistry" TETRAHEDRON LETTERS, ELSEVIER SCIENCE PUBLISHERS, AMSTERDAM, NL, vol. 39, no. 27, 2 July 1998 (1998-07-02), pages 4875-4878, XP004120782 ISSN: 0040-4039**
- **SVENSSON A ET AL: "Fluorinated linkers for monitoring solid-phase synthesis using gel-phase 19F NMR spectroscopy" TETRAHEDRON LETTERS, ELSEVIER SCIENCE PUBLISHERS, AMSTERDAM, NL, vol. 39, no. 39, 24 September 1998 (1998-09-24), pages 7193-7196, XP004133635 ISSN: 0040-4039**
- **HAMPER B C ET AL: "Knoevenagel Condensation of Unsymmetrical Malonamic Esters and Malonates on a Solid Support" TETRAHEDRON LETTERS, ELSEVIER SCIENCE PUBLISHERS, AMSTERDAM, NL, vol. 39, no. 15, 9 April 1998 (1998-04-09), pages 2047-2050, XP004110626 ISSN: 0040-4039**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

- SVENSSON et al., "Use of 19F NMR Spectroscopy to Evaluate Reactions in Solid Phase Organic Synthesis", TETRAHEDRON LETTERS, October 1996, Vol. 37, No. 42, pages 7649-7652, XP002917732
- SHAPIRO et al., "19F NMR Monitoring of a SnAr Reaction on Solid Support", TETRAHEDRON LETTERS, 1996, Vol. 37, No. 27, pages 4671-4674, XP002917733

**Description**

FIELD OF THE INVENTION

This invention is directed to the use of $^{19}F$ NMR to monitor and quantitate solid-phase reactions.

BACKGROUND OF THE INVENTION

Solid-phase synthetic techniques, in which a reagent is immobilized on a polymeric material which is inert to the reagents and reaction conditions employed, as well as being insoluble in the media used, are important synthetic tools for preparing amides and peptides as well as for effecting various functional group transformations. For solid-phase peptide synthesis, a summary of the many techniques may be found in J.M. Stewart and J.D. Young, Solid-phase Peptide Synthesis, 2nd. Ed., Pierce Chemical Co. (Chicago, IL, 1984); J. Meienhofer, Hormonal Proteins and Peptides, vol. 2, p. 46, Academic Press (New York), 1973; and E. Atherton and R.C. Sheppard, Solid-phase Peptide Synthesis: A Practical Approach, IRL Press at Oxford University Press (Oxford, 1989). For the use of solid-phase methodology in the preparation of non-peptide molecules see Leznoff, C.C., Acc. Chem. Res., 1978, 11, 327-333. For the use of polymeric reagents in functional group transformations see A. Akelah and D.C. Sherrington, Application of Functionalized Polymers in Organic Synthesis, Chem Rev., 1981, 81, 557-587 and W. T. Ford and E. C. Blossey, Polymer Supported Reagents, Polymer supported Catalysts, and Polymer Supported Coupling Reactions, in Preparative Chemistry using Supported Reagents, Pierre Laszlo, ed., Academic Press, Inc., 193-212 (1987). For the use of polymeric reagents in oxidation reactions see J. M. J. Frechet et al., J. Org. Chem., 1978, 43, 2618 and G. Cainelli et al., J. Am. Chem. Soc.,1976, 98, 6737. For the use of polymeric reagents in halogenation reactions see J. M. J. Frechet et al., J. Macromol. Sci. Chem.,1977, A-11, 507 and D. C. Sherrington et al., Eur. Polym. J., 1977, 13, 73. For the use of polymeric reagents in epoxidation reactions see J. M. J. Frechet et al., Macromolecules, 1975, 8, 130 and C. R. Harrison et al., J. Chem. Soc. Chem. Commun., 1974, 1009. For the use of polymeric reagents in acylation reactions see M. B. Shambhu et al., Tet. Lett., 1973, 1627 and M. B. Shambhu et al., J. Chem. Soc. Chem. Commun., 1974, 619. For the use of polymeric reagents in Wittig reactions see S. V. McKinley et al., J. Chem. Soc. Chem. Commun., 1972,134.

Polymeric reagents have also found widespread use in combinatorial synthesis and for preparing combinatorial libraries. *See* F. Balkenhohl et al., Angew. Chem. Int. Ed. Engl.,1996, 35, 2288-2337 and L.A. Thompson et al., Chem Rev., 1996, 96, 555-600.

However, analytical methodology for monitoring and quantifying reactions using polymeric reagents is not as developed as the solid-phase techniques themselves. In general, samples are cleaved from the solid support and analyzed by conventional means such as TLC, IR and $^{1}H$ NMR. Removal of samples from the solid support is time consuming and may result in alteration of the reaction product. Therefore, analytical methods for quantitating and monitoring chemical transformations of resin-bound samples is key to the continuing development of solid-phase synthetic techniques.

Reported developments related to the analysis of resin-bound samples using fluorine NMR include the use of $^{19}F$ NMR to characterize products resulting from linking fluorine-containing aromatic compounds to TentaGel resin (Svensson et al., Tetrahedron Lett., 1996, 37, 7649); the use of $^{19}F$ NMR and magic angle spinning $^{19}F$ NMR to monitor the nucleophilic displacement of fluorine from 4-fluoro-3-nitrobenzamide linked to Rink resin (Shapiro et al., Tetrahedron Lett., 1996, 37, 4671); the use of fluorinated analogs ofp-hydroxymethylbenzoic acid, 3-[4-(hydroxymethylphenyl)]alkanoic acid, and 4-(hydroxymethyl)phenoxyacetic acid linkers for monitoring solid-phase synthesis using gel-phase $^{19}F$ NMR (Svensson et al., Tetrahedron Lett., 1998, 39, 7193-7196); and a method of quantifying resin loading using gel phase $^{19}F$ NMR (Stones et al., Tetrahedron Lett., 1998, 39, 4875-4878). WO 97/03931 discloses a compound library comprising a plurality of different units each comprising a solid support with which is associated a single member of the compound library. Each solid support has a defined chemical composition which acts as an intrinsic label capable of identifying the first reaction choice in the synthesis of the associated member of the compound library.

SUMMARY OF THE INVENTION

This invention concerns methods for monitoring and quantifying solid-phase reactions using solid-phase synthesis reagents in which one or more fluorine atoms are permanently incorporated as an internal standard, thereby making it possible to directly quantify and monitor resin loading and subsequent solid-phase reactions by $^{19}F$ NMR, obviating the need for further manipulation of the analytical sample, including adding an external standard or performing additional reactions on the sample to incorporate a fluorine atom.

Accordingly, in its principal aspect, this invention is directed to a method of quantitating a solid-phase reaction comprising:

(a) initiating a solid-phase reaction between a fluorine-containing solid-phase reaction component of formula

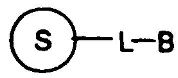

wherein
ⓢ is a solid support containing one or more fluorine atoms as an internal standard;
L is absent or a linking group optionally containing one or more fluorine atoms; and
B is a functional group suitable for reaction with a reactant or fluorine-containing reactant to form a fluorine-containing solid-phase reaction product
and a reactant or fluorine-containing reactant to form a fluorine-containing solid-phase reaction product;
(b) taking a sample of said solid-phase reaction after a predetermined time interval and obtaining a $^{19}$F NMR spectrum of said sample; and
(c) comparing, in said $^{19}$F NMR spectrum, the fluorine-containing solid-phase reaction product $^{19}$F resonance to the $^{19}$F resonance of said internal standard.

BRIEF DESCRIPTION OF THE DRAWINGS

FIGURE 1 is the $^{19}$F MAS NMR spectrum of 2,3,5,6-tetrafluoro-4-hydroxybenzoic acid.
FIGURE 2 is the $^{19}$F MAS NMR spectrum of 4-hydroxy-2,3,5,6-tetrafluorobenzamidomethylcopoly(styrene-1 %-divinylbenzene)-resin.
FIGURE 3 is the $^{19}$F MAS NMR spectrum of a mixture of 3-fluorobenzamide and 4-hydroxy-2,3,5,6-tetrafluorobenzamidomethyl-copoly(styrene-1 %-divinylbenzene)-resin.
FIGURE 4 is the $^{19}$F MAS NMR spectrum of a product mixture resulting from the coupling of aminomethyl resin and 2,3,5,6-tetrafluoro-4-hydroxybenzoic acid in the presence of DIC and DMAP. Figure 4 shows $^{19}$F resonances for 4-hydroxy-2,3,5,6-tetrafluorobenzamidomethyl-copoly(styrene-l%-divinylbenzene)-resin at about -146 and -164 ppm. In addition, the $^{19}$F spectrum also contains resonances at about -140, -144 and -153 ppm corresponding to an unexpected side product resulting from coupling of 4-hydroxy-2,3,5,6-tetrafluorobenzamidomethyl-copoly(styrene-1%-divinylbenzene)-resin with a second molecule of 2,3,5,6-tetrafluoro-4-hydroxybenzoic acid to form the ester. Figure 4 illustrates the usefulness of the methods described herein to detect and monitor formation of an undesired side product and thereby allow the development of synthetic methodology to maximize formation of the desired 4-hydroxy-2,3,5,6-tetrafluorobenzamidomethyl-copoly(styrene-1 %-divinylbenzene)-resin.
FIGURE 5 is the $^{19}$F MAS NMR spectrum of 4-[1-(4-trifluoromethylphenyl)-2,5-dimethylpyrrol-4-oyl]oxy-2,3,5,6-tetrafluorobenzamidomethyl-copoly(styrene-1%-divinylbenzene) resin.
FIGURE 6 is the $^{19}$F MAS NMR spectra of a reaction mixture consisting of 4-hydroxy-2,3,5,6-tetrafluorobenzamidomethyl-copoly(styrene-1%-divinylbenzene)-resin, 1-(4-trifluoromethylphenyl)-2,5-pyrrole-4-carboxylic acid (5 equiv.), 4-dimethylaminopyridine (1.5 equiv.) and diisopropylcarbodiimide (5 equiv.) taken at 5 minutes, 50 minutes and 100 minutes. The spectrum at 5 minutes shows $^{19}$F resonances at about -153 and -172 ppm corresponding to the $^{19}$F resonances of 4-hydroxy-2,3,5,6-tetrafluorobenzamidomethyl-copoly(styrene-1%-divinylbenzene)-resin. At 50 minutes, $^{19}$F resonances at about -153 and about -172 ppm corresponding to 4-hydroxy-2,3,5,6-tetrafluorobenzamidomethylcopoly(styrene-1%-divinylbenzene)-resin, and at about -147 and -158 ppm corresponding to 4-[1-(4-trifluoromethylphenyl)-2,5-dimethylpyrrol-4-oyl]oxy-2,3,5,6-tetrafluorobenzamidomethylcopoly(styrene-1 %-divinylbenzene) are present. The spectrum at 100 minutes consists predominately of $^{19}$F resonances at -147 and -158 ppm indicating that that substantially all of the starting 4-hydroxy-2,3,5,6-tetrafluorobenzamidomethyl-copoly(styrene-1%-divinylbenzene)-resin has been converted to product to 4-[1-(4-trifluoromethylphenyl)-2,5-dimethylpyrrol-4-oyl]oxy-2,3,5,6-tetrafluorobenzamidomethyl-copoly(styrene-1%-divinylbenzene)-resin.

DETAILED DESCRIPTION OF THE INVENTION

Definitions of Terms

As used above and throughout the description of the invention, the following terms, unless otherwise indicated,

shall be understood to have the following meanings:

"Solid support" means a substrate which is inert to the reagents and reaction conditions described herein, as well as being substantially insoluble in the media used.

"Linking group" and "linker" mean a group through which the functional groups suitable for reaction with a fluorine-containing reactant may be covalently linked to the solid support. The linking group is substantially inert to the reagents and reaction conditions described herein.

"Fluorine-containing solid-phase reaction product" means a product formed by reaction between a solid-phase reaction component and a reactant, wherein the fluorine-containing solid-phase reaction product contains at least one fluorine atom. The fluorine-containing solid-phase reaction product is prepared by reacting a fluorine-containing solid-phase reaction component as defined herein with a reactant or fluorine-containing reactant. The fluorine-containing solid-phase reaction product may contain functional groups suitable for further solid-phase reactions, in which case the further solid-phase reactions may be quantified using the methods described herein.

"Solid-phase reaction component" means a solid support as defined herein which contains a plurality of reactive sites containing functional groups suitable for reaction with a reactant to form a fluorine-containing solid-phase reaction product.

"Fluorine-containing solid-phase reaction component" means a solid-phase reaction component as defined herein which contains at least one fluorine atom.

"Reactant" means a compound which contains functionality suitable for forming a covalent bond to the solid-phase reaction component to form a fluorine-containing solid-phase reaction product. In addition to possessing functionality suitable for forming the covalent bond to the solid-phase reaction component, the reactant may contain at least one additional functional group suitable for reaction with additional reactants while attached to the solid support. The functional group may be protected with a suitable protecting group so as to avoid interference with formation of the bond to the solid-phase reaction component.

"Fluorine-containing reactant" means a reactant as defined herein which contains at least one fluorine atom in addition to the functionality suitable for forming a covalent bond to the solid-phase reaction component, such that reaction of the fluorine-containing reactant with a fluorine-containing solid-phase reaction component results in formation of a fluorine-containing solid-phase reaction product in which at least one fluorine atom is incorporated in the fluorine-containing solid-phase reaction product through the fluorine-containing reactant.

"Resin loading" means the fraction of reactive sites on the solid-phase reaction component which react with the reactant or fluorine-containing reactant to form the fluorine-containing solid-phase reaction product (i.e., the fraction of reactive sites which are "loaded" by the reactant or fluorine-containing reactant).

"Standard" refers to a fluorine-containing entity, which when combined in a known amount with a fluorine-containing solid-phase reaction product, permits quantification of the formation of the fluorine-containing solid-phase reaction product by comparison of the $^{19}F$ integral of the fluorine-containing solid-phase reaction product and the $^{19}F$ integrals of the standard.

"Magic angle spinning" (MAS) is a NMR technique in which the sample tube is oriented at a defined angle relative to the magnetic field. Magic angle spinning is used in solid state and gel phase NMR to remove line broadening caused by chemical-shift anisotropy. The "magic angle" is about 54.7˚. For general discussions of MAS NMR, see Koenig, J.L., Spectroscopy of Polymers; American Chemical Society, Washington, DC, 1992 and Fitch et al., J. Org. Chem., 1994, 59, 7955, and references cited therein.

"Amine protecting group" means an easily removable group which is known in the art to protect an amino group against undesirable reaction during synthetic procedures and to be selectively removable. The use of N-protecting groups is well known in the art for protecting groups against undesirable reactions during a synthetic procedure and many such protecting groups are known, cf., for example, T.H. Greene and P.G.M. Wuts, Protective Groups in Organic Synthesis, 2nd edition, John Wiley & Sons, New York (1991). Preferred N-protecting groups are acyl, including formyl, acetyl, chloroacetyl, trichloroacetyl, o-nitrophenylacetyl, o-nitrophenoxyacetyl, trifluoroacetyl, acetoacetyl, 4-chlorobutyryl, isobutyryl, o-nitrocinnamoyl, picolinoyl, acylisothiocyanate, aminocaproyl, benzoyl and the like, and acyloxy including methoxycarbonyl, 9-fluorenylmethoxycarbonyl, 2,2,2-trifluoroethoxycarbonyl, 2-trimethylsilylethxoycarbonyl, vinyloxycarbonyl, allyloxycarbonyl, *t*-butyloxycarbonyl (BOC), 1,1-dimethylpropynyloxycarbonyl, benzyloxycarbonyl (CBZ), p-nitrophenylsulfinyl, p-nitrobenzyloxycarbony, 2,4-dichlorobenzyloxycarbonyl, allyloxycarbonyl (Alloc), and the like.

"Carboxylic acid protecting group" and "acid protecting group" mean an easily removable group which is known in the art to protect a carboxylic acid ($-CO_2H$) group against undesirable reaction during synthetic procedures and to be selectively removable. The use of carboxylic acid protecting groups is well known in the art and many such protecting groups are known, CF, for example, T.H. Greene and P.G.M. Wuts, Protective Groups in Organic Synthesis, 2nd edition, John Wiley & Sons, New York (1991). Examples of carboxylic acid protecting groups include esters such as methoxymethyl, methylthiomethyl, tetrahydropyranyl, benzyloxymethyl, substituted and unsubstituted

phenacyl, 2,2,2-trichloroethyl, *tert*-butyl, cinnamyl, substituted and unsubstituted benzyl, trimethylsilyl, allyl, and the like, and amides and hydrazides including N,N-dimethyl, 7-nitroindolyl, hydrazide, N-phenylhydrazide, and the like. Especially preferred carboxylic acid protecting groups are tert-butyl and benzyl.

"Hydroxy protecting group" means an easily removable group which is known in the art to protect a hydroxy group against undesirable reaction during synthetic procedures and to be selectively removable. The use of hydroxy protecting groups is well known in the art and many such protecting groups are known, cf., for example, T.H. Greene and P.G.M. Wuts, Protective Groups in Organic Synthesis, 2nd edition, John Wiley & Sons, New York (1991). Examples of hydroxy protecting groups include ethers such as methyl; substituted methyl ethers such as methoxymethyl (MOM), methylthiomethyl (MTM), 2-methoxyethoxymethyl (MEM), bis(2-chloroethoxy)methyl, tetrahydropyranyl (THP), tetrahydrothiopyranyl, 4-methoxytetrahydropyranyl, 4-methoxytetrahydrothiopyranyl, tetrahydrofuranyl, tetrahydrothiofuranyl, and the like; substituted ethyl ethers such as 1-ethoxyethyl, 1-methyl-1-methoxyethyl, 2-(phenylselenyl)ethyl, t-butyl, allyl, benzyl, o-nitrobenzyl, triphenylinethyl, a-naphthyldiphenylmethyl, *p*-methoxyphenyldiphenylmethyl, 9-(9-phenyl-10-oxo)anthranyl (tritylone), and the like; silyl ethers such as trimethylsilyl (TMS), isopropyldimethylsilyl, *t*-butyldimethylsilyl (TBDMS), *t*-butyldiphenylsilyl, tribenzylsilyl, tri-*p*-xylylsilyl, triisopropylsilyl, and the like; esters such as formate, acetate, trichloroacetate, phenoxyacetate, isobutyrate, pivaloate, adamantoate, benzoate, 2,4,6-trimethylbenzoate, and the like; and carbonates such as methyl, 2,2,2-trichloroethyl, allyl, *p*-nitrophenyl, benzyl, *p*-nitrobenzyl, S-benzyl thiocarbonate, and the like.

"Amino acid" means an amino acid selected from the group consisting of natural and unnatural amino acids as defined herein.

"Natural amino acid" means an $\alpha$-amino acid selected from the group consisting of alanine, valine, leucine, isoleucine, proline, phenylalanine, tryptophan, methionine, glycine, serine, threonine, cysteine, tyrosine, asparagine, glutamine, lysine, arginine, histidine, aspartic acid and glutamic acid.

"Unnatural amino acid" means an amino acid for which there is no nucleic acid codon. Examples of unnatural amino acids include, for example, the D-isomers of the natural $\alpha$-amino acids as indicated above; aminobutyric acid (Aib), 3-aminoisobutyric acid (bAib), norvaline (Nva), $\beta$-Ala, 2-aminoadipic acid (Aad), 3-aminoadipic acid (bAad), 2-aminobutyric acid (Abu), $\gamma$-aminobutyric acid (Gaba), 6-aminocaproic acid (Acp), 2,4-diaminobutryic acid (Dbu), $\alpha$-aminopimelic acid, trimethylsilyl-Ala (TMSA), allo-isoleucine (aIle), norleucine (Nle), *tert*-Leu, citrulline (Cit), ornithine (Om), 2,2'-diaminopimelic acid) (Dpm), 2,3-diaminopropionic acid (Dpr), $\alpha$- or $\beta$-Nal, cyclohexyl-Ala (Cha), hydroxyproline, sarcosine (Sar), and the like; cyclic amino acids; $N^{\alpha}$-alkylated amino acids such as $N^{\alpha}$-methylglycine (MeGly), $N^{\alpha}$-ethylglycine (EtGly) and $N^{\alpha}$-ethylasparagine (EtAsn); and amino acids in which the $\alpha$-carbon bears two side-chain substituents.

"Equivalent amino acid" means an amino acid which may be substituted for another amino acid in the peptides according to the invention without any appreciable loss of function. In making such changes, substitutions of like amino acids is made on the basis of relative similarity of side chain substituents, for example regarding size, charge, hydrophilicity, hydropathicity and hydrophobicity as described herein.

"Peptide" and "polypeptide" mean a polymer in which the monomers are natural or unnatural amino acid residues joined together through amide bonds. The term "peptide backbone" means the series of amide bonds through which the amino acid residues are joined. The term "amino acid residue" means the individual amino acid units incorporated into the peptides or polypeptides.

"Aliphatic" means a radical derived from a non aromatic C-H bond by removal of the hydrogen atom. The aliphatic radical may be further substituted by additional aliphatic or aromatic radicals as defined herein. Representative aliphatic groups include alkyl, alkenyl, alkynyl, cycloalkyl, cycloalkenyl, heterocyclyl, heterocyclenyl, aralkenyl, aralkyloxyalkyl, aralkyloxycarbonylalkyl, aralkyl, aralkynyl, aralkyloxyalkenyl, heteroaralkenyl, heteroaralkyl, heteroaralkyloxyalkenyl, heteroaralkyloxyalkyl, heteroaralkynyl, fused arylcycloalkyl, fused heteroarylcycloalkyl, fused arylcycloalkenyl, fused heteroarylcycloalkenyl, fused arylheterocyclyl, fused heteroarylheterocyclyl, fused arylheterocyclenyl, fused heteroarylheterocyclenyl, and the like.

"Aromatic" means a radical derived from an aromatic C-H bond by removal of the hydrogen atom. Aromatic includes both aryl and heteroaryl rings as defined herein. The aryl or heteroaryl ring may be further substituted by additional aliphatic or aromatic radicals as defined herein. Representative aromatic groups include aryl, fused cycloalkenylaryl, fused cycloalkylaryl, fused heterocyclylaryl, fused heterocyclenylaryl, heteroaryl, fused cycloalkylheteroaryl, fused cycloalkenylheteroaryl, fused heterocyclenylheteroaryl, fused heterocyclylheteroaryl, and the like.

"Acyl" means an H-CO- or alkyl-CO- group wherein the alkyl group is as herein described. Preferred acyls contain a lower alkyl. Exemplary acyl groups include formyl, acetyl, propanoyl, 2-methylpropanoyl, butanoyl and palmitoyl.

"Acylamino" is an acyl-NH- group wherein acyl is as defined herein.

"Alkenoyl" means an alkenyl-CO- group wherein alkenyl is as defined herein.

"Alkenyl" means a straight or branched aliphatic hydrocarbon group of 2 to about 15 carbon atoms which contains at least one carbon-carbon double bond. Preferred alkenyl groups have 2 to about 12 carbon atoms; more preferred alkenyl groups have 2 to about 4 carbon atoms. The alkenyl group is optionally substituted with one or more alkyl

group substituents as defined herein. Representative alkenyl groups include ethenyl, propenyl, *n*-butenyl, *i*-butenyl, 3-methylbut-2-enyl, *n*-pentenyl, heptenyl, octenyl, cyclohexylbutenyl and decenyl.

"Alkenylene" denotes a divalent group derived from a straight or branched chain hydrocarbon containing at least one carbon-carbon double bond. Representative alkenylene include $-CH=CH-$, $-CH_2CH=CH-$, $-C(CH_3)=CH-$, $-CH_2CH=CHCH_2-$, and the like.

"Alkenyloxy" means an alkenyl-O- group wherein the alkenyl group is as herein described. Representative alkenyloxy groups include allyloxy or 3-butenyloxy.

"Alkoxy" means an alkyl-O- group wherein the alkyl group is as defined herein. Representative alkoxy groups include methoxy, ethoxy, *n*-propoxy, *i*-propoxy, *n*-butoxy, heptoxy, and the like.

"Alkoxyalkylenyl" means an alkyl-O-alkylene- group wherein alkyl and alkylene are as defined herein. Representative alkoxyalkylenyl groups include methoxyethyl, ethoxymethyl, *n*-butoxymethyl and cyclopentylmethyloxyethyl.

"Alkoxyalkoxy" means an alkyl-O-alkylene-O- group. Representative alkoxyalkoxy include methoxymethoxy, methoxyethoxy, ethoxyethoxy, and the like.

"Alkoxycarbonyl" means an ester group; i.e. an alkyl-O-CO- group wherein alkyl is as defined herein. Representative alkoxycarbonyl groups include methoxycarbonyl, ethoxycarbonyl, *t*-butyloxycarbonyl, and the like.

"Alkoxycarbonylalkyl" means an alkyl-O-CO-alkylene- group wherein alkyl and alkylenyl are as defined herein. Representative alkoxycarbonylalkyl include methoxycarbonylmethyl, and ethoxycarbonylmethyl, methoxycarbonyl ethyl, and the like.

"Alkyl" means an aliphatic hydrocarbon group which may be straight or branched having about 1 to about 20 carbon atoms in the chain. Preferred alkyl groups have 1 to about 12 carbon atoms in the chain. Branched means that one or more lower alkyl groups such as methyl, ethyl or propyl are attached to a linear alkyl chain. "Lower alkyl" means about 1 to about 4 carbon atoms in the chain which may be straight or branched. The alkyl may be substituted with one or more "alkyl group substituents" which may be the same or different, and include halo, cycloalkyl, hydroxy, alkoxy, amino, carbamoyl, acylamino, aroylamino, carboxy, alkoxycarbonyl, aralkyloxycarbonyl, or heteroaralkyloxycarbonyl. Representative alkyl groups include methyl, trifluoromethyl, cyclopropylmethyl, cyclopentylmethyl, ethyl, *n*-propyl, *i*-propyl, *n*-butyl, *t*-butyl, *n*-pentyl, 3-pentyl, methoxyethyl, carboxymethyl, methoxycarbonylethyl, benzyloxycarbonylmethyl, and pyridylmethyloxycarbonylmethyl.

"Alkylene" means a straight or branched bivalent hydrocarbon chain of 1 to about 20 carbon atoms. Alkylene may be substituted by one or more alkyl group substituents as defined herein. Preferred alkylene groups are the lower alkylene groups having 1 to about 4 carbon atoms. Representative alkylene groups include methylene, ethylene, and the like.

"Alkylsulfinyl" means an alkyl-SO- group wherein the alkyl group is as defined above. Preferred alkylsulfinyl groups are those wherein the alkyl group is lower alkyl.

"Alkylsulfonyl" means an alkyl-$SO_2$-group wherein the alkyl group is as defined herein. Preferred alkylsulfonyl groups are those wherein the alkyl group is lower alkyl.

"Alkylsulfonylcarbamoyl" means an alkyl-$SO_2$-NH-CO- group wherein alkyl group is defined herein. Preferred alkylsulfonylcarbamoyl groups are those wherein the alkyl group is lower alkyl.

"Alkylthio" means an alkyl-S-group wherein the alkyl group is as defined herein. Preferred alkylthio groups are those wherein the alkyl group is lower alkyl. Representative alkylthio groups include methylthio, ethylthio, i-propylthio, heptylthio, and the like.

"Alkynyl" means a straight or branched aliphatic hydrocarbon group of 2 to about 15 carbon atoms which contains at least one carbon-carbon triple bond. Preferred alkynyl groups have 2 to about 12 carbon atoms. More preferred alkynyl groups contain 2 to about 4 carbon atoms. "Lower alkynyl" means alkynyl of 2 to about 4 carbon atoms. The alkynyl group may be substituted by one or more alkyl group substituents as defined herein. Representative alkynyl groups include ethynyl, propynyl, *n*-butynyl, 2-butynyl, 3-methylbutynyl, n-pentynyl, heptynyl, octynyl, decynyl, and the like.

"Alkynylene" refers to a divalent group derived by the removal of two hydrogen atoms from a straight or branched chain acyclic hydrocarbon group containing a carbon-carbon triple bond. Representative alkynylene include

$-CH{\vdots}CH-$, $-CH{\vdots}CH\cdot CH_2-$, $-CH{\vdots}CH\cdot CH(CH_3)-$, and the like.

"Alkynyloxy" means an alkynyl-O- group wherein the alkynyl group is defined herein. Representative alkynyloxy groups include propynyloxy, 3-butynyloxy, and the like.

"Alkynyloxyalkyl" means alkynyl-O-alkylene- group wherein alkynyl and alkylenyl are defined herein.

"Amidino" or "amidine" means a group of formula

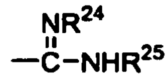

wherein $R^{24}$ is hydrogen; $R^{26}O_2C$- wherein $R^{26}$ is hydrogen, alkyl, aralkyl or heteroaralkyl; $R^{26}O$-; $R^{26}C(O)$-; cyano; alkyl; nitro; or amino, and $R^{25}$ is selected from hydrogen; alkyl; aralkyl; and heteroaralkyl.

"Amino" means a group of formula $Y^1$ $Y^2N$- wherein $Y^1$ and $Y^2$ are independently hydrogen; acyl; or alkyl, or $Y^1$ and $Y^2$ taken together with the N atom through which $Y^1$ and $Y^2$ are linked form a 4 to 7 membered azaheterocyclyl. Representative amino groups include amino ($H_2N$-), methylamino, dimethylamino, diethylamino, and the like.

"Aminoalkyl" means an amino-alkylene- group wherein amino and alkylene are defined herein. Representative aminoalkyl groups include aminomethyl, aminoethyl, dimethylaminomethyl, and the like.

"Aralkenyl" means a aryl-alkenylene- group wherein aryl and alkenylene are define herein. Preferred aralkenyls contain a lower alkenylene moiety. A representative aralkenyl group is 2-phenethenyl.

"Aralkyloxy" means an aralkyt-O- group wherein aralkyl is defined herein. Representative aralkoxy groups include benzyloxy, naphth-1-ylmethoxy, naphth-2-ylmethoxy, and the like.

"Aralkyloxyalkyl" means an aralkyl-O-alkylene- group wherein aralkyl and alkylene are defined herein. A representative aralkoxyalkyl group is benzyloxyethyl.

"Aralkyloxycarbonyl" means an aralkyl-O-CO- group wherein aralkyl is defined herein. A representative aralkoxycarbonyl group is benzyloxycarbonyl.

"Aralkyloxycarbonylalkyl" means an aralkoxycarbonyl-alkylene- group wherein aralkoxycarbonyl and alkylene are defined herein. Representative aralkoxycarbonylalkyls include benzyloxycarbonylmethyl, benzyloxycarbonylethyl.

"Aralkyl" means an aryl-alkylene-group wherein aryl and alkylene are defined herein. Preferred aralkyls contain a lower alkylene group. Representative aralkyl groups include benzyl, 2-phenethyl, naphthlenemethyl, and the like.

"Aralkyloxyalkenyl" means an aralkyl-O-alkenylene- group wherein aralkyl and alkenylene are defined herein. A representative aralkyloxyalkenyl group is 3-benzyloxyallyl.

"Aralkylsulfonyl" means an aralkyl-$SO_2$-group wherein aralkyl is defined herein.

"Aralkylsulfinyl" means an aralkyl-SO- group wherein aralkyl is defined herein.

"Aralkylthio" means an aralkyl-S- group wherein aralkyl is defined herein. A representative aralkylthio group is benzylthio.

"Aroyl" means an aryl-CO- group wherein aryl is defined herein. Representative aroyl include benzoyl, naphth-1-oyl and naphth-2-oyl.

"Aryl" means an aromatic monocyclic or multicyclic ring system of 6 to about 14 carbon atoms, preferably of about 6 to about 10 carbon atoms. The aryl is optionally substituted with one or more "ring system substituents" which may be the same or different, and are as defined herein. Representative aryl groups include phenyl and naphthyl.

"Aralkynyl" means an aryl-alkynylene- group wherein aryl and alkynylene are defined herein. Representative aralkynyl groups include phenylacetylenyl and 3-phenylbut-2-ynyl.

"Aryldiazo" means an aryl-N=N- group wherein aryl is defined herein. Representative aryldiazo groups include phenyldiazo and naphthyldiazo.

"Arylcarbamoyl" means an aryl-NHCO- group, wherein aryl is defined herein.

"Carbamyl" means a group of formula $Y^1Y^2NCO$- wherein $Y^1$ and $Y^2$ are defined herein. Representative carbamyl groups include carbamyl ($H_2NCO$-), dimethylaminocarbamoyl ($Me_2NCO$-), and the like.

"Fused arylcycloalkenyl" means a radical derived from a fused aryl and cycloalkenyl as defined herein by removal of hydrogen atom from the cycloalkenyl portion. Preferred fused arylcycloalkenyls are those wherein aryl is phenyl and the cycloalkenyl consists of about 5 to about 6 ring atoms. The fused arylcycloalkenyl is optionally substituted by one or more ring system substituents, wherein "ring system substituent" is as defined herein. Representative fused arylcycloalkenyl include 1,2-dihydronaphthylene, indene, and the like, in which the bond to the parent moiety is through a non-aromatic carbon atom.

"Fused cycloalkenylaryl" means a radical derived from a fused arylcycloalkenyl as defined herein by removal of hydrogen atom from the aryl portion. Representative fused cycloalkenylaryl are as described herein for a fused arylcycloalkenyl, except that the bond to the parent moiety is through an aromatic carbon atom.

"Fused arylcycloalkyl" means a radical derived from a fused aryl and cycloalkyl as defined herein by removal of a hydrogen atom from the cycloalkyl portion. Preferred fused arylcycloalkyls are those wherein aryl is phenyl and the cycloalkyl consists of about 5 to about 6 ring atoms. The fused arylcycloalkyl is optionally substituted by one or more ring system substituents, wherein "ring system substituent" is as defined herein. Representative fused arylcycloalkyl includes 1,2,3,4-tetrahydronaphthyl, and the like, in which the bond to the parent moiety is through a non-aromatic carbon atom.

"Fused cycloalkylaryl" means a radical derived from a fused arylcycloalkyl as defined herein by removal of a hydrogen

atom from the aryl portion. Representative fused cycloalkylaryl are as described herein for a fused arylcycloalkyl radical, except that the bond to the parent moiety is through an aromatic carbon atom.

"Fused arylheterocyclenyl" means a radical derived from a fused aryl and heterocyclenyl as defined herein by removal of a hydrogen atom from the heterocyclenyl portion. Preferred fused arylheterocyclenyls are those wherein aryl is phenyl and the heterocyclenyl consists of about 5 to about 6 ring atoms. The prefix aza, oxa or thia before the heterocyclenyl portion of the fused arylheterocyclenyl means that at least a nitrogen, oxygen or sulfur atom respectively is present as a ring atom. The fused arylheterocyclenyl is optionally substituted by one or more ring system substituents, wherein "ring system substituent" is as defined herein. The nitrogen or sulphur atom of the heterocyclenyl portion of the fused arylheterocyclenyl is optionally oxidized to the corresponding N-oxide, S-oxide or S,S-dioxide. Representative fused arylheterocyclenyl include 3H-indolinyl, 1H-2-oxoquinolyl, 2H-1-oxoisoquinolyl, 1,2-dihydroquinolinyl, 3,4-dihydroquinolinyl, 1,2-dihydroisoquinolinyl, 3,4-dihydroisoquinolinyl, and the like, in which the bond to the parent moiety is through a non-aromatic carbon atom.

"Fused heterocyclenylaryl" means a radical derived from a fused arylheterocyclenyl as defined herein by removal of a hydrogen atom from the aryl portion. Representative fused heterocyclenylaryl are as defined herein for a fused arylheterocyclenyl radical, except that the bond to the parent moiety is through an aromatic carbon atom.

"Fused arylheterocyclyl" means a radical derived from a fused aryl and heterocyclyl as defined herein by removal of a hydrogen atom from the heterocyclyl portion. Preferred fused arylheterocyclyls are those wherein aryl is phenyl and the heterocyclyl consists of about 5 to about 6 ring atoms. The prefix aza, oxa or thia before heterocyclyl means that at least a nitrogen, oxygen or sulfur atom respectively is present as a ring atom. The fused arylheterocyclyl is optionally substituted by one or more ring system substituents, wherein "ring system substituent" is as defined herein. The nitrogen or sulphur atom of the heterocyclyl portion of the fused arylheterocyclyl is optionally oxidized to the corresponding N-oxide, S-oxide or S,S-dioxide. Representative preferred fused aryllheterocyl ring systems include indolinyl, 1,2,3,4-tetrahydroisoquinoline, 1,2,3,4-tetrahydroquinoline, 1H-2,3-dihydroisoindolyl, 2,3-dihydrobenz[f]isoindolyl, 1,2,3,4-tetrahydrobenz[g]isoquinolinyl, and the like, in which the bond to the parent moiety is through a non-aromatic carbon atom.

"Fused heterocyclylaryl" means a radical derived from a fused aryheterocyclyl as defined herein by removal of a hydrogen atom from the heterocyclyl portion. Representative preferred fused heterocyclylaryl ring systems are as described for fused arylheterocyclyl, except that the bond to the parent moiety is through an aromatic carbon atom.

"Carboxy" means a HO(O)C- group (i.e. a carboxylic acid).

"Carboxyalkyl" means a HO(O)C-alkylene- group wherein alkylene is defined herein. Representative carboxyalkyls include carboxymethyl and carboxyethyl.

"Cycloalkyloxy" means a cycloalkyl-O- group wherein cycloalkyl is defined herein. Representative cycloalkyloxy groups include cyclopentyloxy, cyclohexyloxy, and the like.

"Cycloalkyl" means a non-aromatic mono- or multicyclic ring system of about 3 to about 10 carbon atoms, preferably of about 5 to about 10 carbon atoms. Preferred cycloalkyl rings contain about 5 to about 6 ring atoms. The cycloalkyl is optionally substituted with one or more "ring system substituents" which may be the same or different, and are as defined herein. Representative monocyclic cycloalkyl include cyclopentyl, cyclohexyl, cycloheptyl, and the like. Representative multicyclic cycloalkyl include 1-decalin, norbornyl, adamantyl, and the like.

"Cycloalkenyl" means a non-aromatic mono- or multicyclic ring system of about 3 to about 10 carbon atoms, preferably of about 5 to about 10 carbon atoms which contains at least one carbon-carbon double bond. Preferred cycloalkylene rings contain about 5 to about 6 ring atoms. The cycloalkenyl is optionally substituted with one or more "ring system substituents" which may be the same or different, and are as defined herein. Representative monocyclic cycloalkenyl include cyclopentenyl, cyclohexenyl, cycloheptenyl, and the like. A representative multicyclic cycloalkenyl is norbomylenyl.

"Cycloalkylenyl" means a bivalent, saturated carbocyclic group having about 4 to about 8 carbon atoms. Preferred cycloalkylenyl groups include 1,2-, 1,3-, or 1,4- *cis* or *trans*-cyclohexanylene.

"Diazo" means a bivalent -N=N- radical.

"Ethylenyl" means a -CH=CH- group.

"Halo" or "halogen" mean fluoro, chloro, bromo, or iodo.

"Heteroaralkenyl" means a heteroaryl-alkenylenyl- group wherein heteroaryl and alkenylenyl are defined herein. Preferred heteroaralkenyls contain a lower alkenylene moiety. Representative heteroaralkenyl groups include 4-pyridylvinyl, thienylethenyl, pyridylethenyl, imidazolylethenyl, pyrazinylethenyl, and the like.

"Heteroaralkyl" means a heteroaryl-alkylenyl- group wherein heteroaryl and alkylenyl are defined herein. Preferred heteroaralkyls contain a lower alkylenyl group. Representative heteroaralkyl groups include thienylmethyl, pyridylmethyl, imidazolylmethyl, pyrazinylmethyl, and the like.

"Heteroaralkyloxy" means an heteroarallcyl-O- group wherein heteroaralkyl is defined herein. A representative heteroaralkyloxy group is 4-pyridylmethyloxy.

"Heteroaralkyloxyalkenyl" means a heteroaralkyl-O-alkenylene- group wherein heteroaralkyl and alkenylene are

defined herein. A representative heteroaralkyloxyalkenyl group is 4-pyridylmethyloxyallyl.

"Heteroaralkyloxyalkyl" means a heteroaralkyl-O-alkylene- group wherein heteroaralkyl and alkylene are defined herein. A representative heteroaralkyloxy group is 4-pyridylmethyloxyethyl.

"Heteroaralkynyl" means an heteroaryl-alkynylene- group wherein heteroaryl and alkynylene are defined herein. Preferred heteroaralkynyls contain a lower alkynylene moiety. Representative heteroaralkynyl groups include pyrid-3-ylacetylenyl, quinolin-3-ylacetylenyl, 4-pyridylethynyl, and the like.

"Heteroaroyl" means an means a heteroaryl-CO- group wherein heteroaryl is defined herein. Representative heteroaroyl groups include thiophenoyl, nicotinoyl, pyrrol-2-ylcarbonyl, pyridinoyl, and the like.

"Heteroaryl" means an aromatic monocyclic or multicyclic ring system of about 5 to about 14 ring atoms, preferably about 5 to about 10 ring atoms, in which one or more of the atoms in the ring system is/are element(s) other than carbon, for example nitrogen, oxygen or sulfur. Preferred heteroaryls contain about 5 to about 6 ring atoms. The "heteroaryl" may also be substituted by one or more "ring system substituents" which may be the same or different, and are as defined herein. The prefix aza, oxa or thia before heteroaryl means that at least a nitrogen, oxygen or sulfur atom respectively is present as a ring atom. A nitrogen atom of a heteroaryl may be oxidized to the corresponding N-oxide. Representative heteroaryls include pyrazinyl, furanyl, thienyl, pyridyl, pyrimidinyl, isoxazolyl, isothiazolyl, oxazolyl, thiazolyl, pyrazolyl, furazanyl, pyrrolyl, pyrazolyl, triazolyl, 1,2,4-thiadiazolyl, pyridazinyl, quinoxalinyl, phthalazinyl, imidazo[1,2-a]pyridine, imidazo[2,1-b]thiazolyl, benzofurazanyl, indolyl, azaindolyl, benzimidazolyl, benzothienyl, quinolinyl, imidazolyl, thienopyridyl, quinazolinyl, thienopyrimidyl, pyrrolopyridyl, imidazopyridyl, isoquinolinyl, benzoazaindolyl, 1,2,4-triazinyl,

"Heteroaryldiazo" means an heteroaryl-N=N- group wherein heteroaryl is as defined herein.

"Fused heteroarylcycloalkenyl" means a radical derived from a fused heteroaryl and cycloalkenyl as defined herein by removal of a hydrogen atom from the cycloalkenyl portion. Preferred fused heteroarylcycloalkenyls are those wherein the heteroaryl and the cycloalkenyl each contain about 5 to about 6 ring atoms. The prefix aza, oxa or thia before heteroaryl means that at least a nitrogen, oxygen or sulfur atom respectively is present as a ring atom. The fused heteroarylcycloalkenyl is optionally substituted by one or more ring system substituents, wherein "ring system substituent" is as defined herein. The nitrogen atom of the heteroaryl portion of the fused heteroarylcycloalkenyl is optionally oxidized to the corresponding N-oxide. Representative fused heteroarylcycloalkenyl include 5,6-dihydroquinolyl, 5,6-dihydroisoquinolyl, 5,6-dihydroquinoxalinyl, 5,6-dihydroquinazolinyl, 4,5-dihydro-1H-benzimidazolyl, 4,5-dihydrobenzoxazolyl, and the like, in which the bond to the parent moiety is through a non-aromatic carbon atom.

"Fused cycloalkenylheteroaryl" means a radical derived from a fused heteroarylcycloalkenyl as defined herein by removal of a hydrogen atom from the heteroaryl portion. Representative fused cycloalkenylheteroaryl are as described herein for fused heteroaylcycloalkenyl, except that the bond to the parent moiety is through an aromatic carbon atom.

"Fused heteroarylcycloalkyl" means a radical derived from a fused heteroaryl and cycloalkyl as defined herein by removal of a hydrogen atom from the cycloalkyl portion. Preferred fused heteroarylcycloalkyls are those wherein the heteroaryl thereof consists of about 5 to about 6 ring atoms and the cycloalkyl consists of about 5 to about 6 ring atoms. The prefix aza, oxa or thia before heteroaryl means that at least a nitrogen, oxygen or sulfur atom is present respectively as a ring atom. The fused heteroarylcycloalkyl is optionally substituted by one or more ring system substituents, wherein "ring system substituent" is as defined herein. The nitrogen atom of the heteroaryl portion of the fused heteroarylcycloalkyl is optionally oxidized to the corresponding N-oxide. Representative fused heteroarylcycloalkyl include 5,6,7,8-tetrnhydroquinolinyl, 5,6,7,8-tetrahydroisoquinolyl, 5,6,7,8-tetrahydroquinoxalinyl, 5,6,7,8-tetrahydroquinazolyl, 4,5,6,7-tetrahydro-1H-benzimidazolyl, 4,5,6,7-tetrahydrobenzoxazolyl, 1H-4-oxa-1,5-diazanaphthalen-2-onyl, 1,3-dihydroimidizole-[4,5]-pyridin-2-onyl, and the like, in which the bond to the parent moiety is through a non-aromatic carbon atom.

"Fused cycloalkylheteroaryl" means a radical derived from a fused heteroarylcycloalkyl as defined herein by removal of a hydrogen atom from the heteroaryl portion. Representative fused cycloalkylheteroaryl are as described herein for fused heteroarylcycloalkyl, except that the bond to the parent moiety is through an aromatic carbon atom.

"Fused heteroarylheterocyclenyl" means a radical derived from a fused heteroaryl and heterocyclenyl as defined herein by the removal of a hydrogen atom from the heterocyclenyl portion. Preferred fused heteroarylheterocyclenyls are those wherein the heteroaryl thereof consists of about 5 to about 6 ring atoms and the heterocyclenyl consists of about 5 to about 6 ring atoms. The prefix aza, oxa or thia before heteroaryl or heterocyclenyl means that at least a nitrogen, oxygen or sulfur atom is present respectively as a ring atom. The fused heteroarylheterocyclenyl is optionally substituted by one or more ring system substituents, wherein "ring system substituent" is as defined herein. The nitrogen atom of the heteroaryl portion of the fused heteroarylheterocyclenyl is optionally oxidized to the corresponding N-oxide. The nitrogen or sulphur atom of the heterocyclenyl portion of the fused heteroarylheterocyclenyl is optionally oxidized to the corresponding N-oxide, S-oxide or S,S-dioxide. Representative fused heteroarylheterocyclenyl include 7,8-dihydro[1,7]naphthyridinyl, 1,2-dihydro[2,7]naphthyridinyl, 6,7-dihydro-3H-imidazo [4,5-c]pyridyl, 1,2-dihydro-1,5-naphthyridinyl, 1,2-dihydro-1,6-naphthyridinyl, 1,2-dihydro-1,7-naphthyridinyl, 1,2-dihydro-1,8-naphthyridinyl, 1,2-dihydro-2,6-naphthyridinyl, and the like, in which the bond to the parent moiety is through a non aromatic carbon atom.

"Fused heterocyclenylheteroaryl" means a radical derived from a fused heteroarylheterocyclenyl as defined herein by the removal of a hydrogen atom from the heteroaryl portion. Representative fused heterocyclenylheteroaryl are as described herein for fused heteroarylheterocyclenyl, except that the bond to the parent moiety is through an aromatic carbon atom.

"Fused heteroarylheterocyclyl" means a radical derived from a fused heteroaryl and heterocyclyl as defined herein, by removal of a hydrogen atom from the heterocyclyl portion. Preferred fused heteroarylheterocyclyls are those wherein the heteroaryl thereof consists of about 5 to about 6 ring atoms and the heterocyclyl consists of about 5 to about 6 ring atoms. The prefix aza, oxa or thia before the heteroaryl or heterocyclyl portion of the fused heteroarylheterocyclyl means that at least a nitrogen, oxygen or sulfur atom respectively is present as a ring atom. The fused heteroarylheterocyclyl is optionally substituted by one or more ring system substituents, wherein "ring system substituent" is as defined herein. The nitrogen atom of the heteroaryl portion of the fused heteroarylheterocyclyl is optionally oxidized to the corresponding N-oxide. The nitrogen or sulphur atom of the heterocyclyl portion of the fused heteroarylheterocyclyl is optionally oxidized to the corresponding N-oxide, S-oxide or S,S-dioxide. Representative fused heteroarylheterocyclyl include
2,3-dihydro-1H pyrrol[3,4-b]quinolin-2-yl, 1,2,3,4-tetrahydrobenz [b][1,7]naphthyridin-2-yl,
1,2,3,4-tetrahydrobenz [b][1,6]naphthyridin-2-yl, 1,2,3,4-tetrahydro-9H-pyrido[3,4-b]indol-2yl,
1,2,3,4-tetrahydro-9H-pyrido[4,3-b]indol-2yl, 2,3,-dihydro-1H-pyrrolo[3,4-b]indol-2-yl,
1H-2,3,4,5-tetrahydroazepino[3,4-b]indol-2-yl, 1H-2,3,4,5-tetrahydroazepino[4,3-b]indol-3-yl,
1H-2,3,4,5-tetrahydroazepino[4,5-b]indol-2 yl, 5,6,7,8-tetrahydro[1,7]napthyridinyl,
1,2,3,4-tetrhydro[2,7]naphthyridyl, 2,3-dihydro[1,4]dioxino[2,3-b]pyridyl,
2,3-dihydro[1,4]dioxino[2,3-b]pryidyl, 3,4-dihydro-2H-1-oxa[4,6]diazanaphthalenyl,
4,5,6,7-tetrahydro-3H-imidazo[4,5-c]pyridyl, 6,7-dihydro[5,8]diazanaphthalenyl,
1,2,3,4-tetrahydro[1,5] napthyridinyl, 1,2,3,4-tetrahydro[1,6]napthyridinyl,
1,2,3,4-tetrahydro[1,7]napthyridinyl, 1,2,3,4-tetrahydro[1,8]napthyridinyl,
1,2,3,4-tetrahydro[2,6]napthyridinyl, and the like, in which the bond to the parent moiety is through a non-aromatic carbon atom.

"Fused heterocyclylheteroaryl" means a radical derived from a fused heteroarylheterocyclyl as defined herein, by removal of a hydrogen atom from the heteroaryl portion. Representative fused heterocyclylheteroaryl are as described herein for fused heterarylheterocyclyl, except that the bond to the parent moiety is through an aromatic carbon atom.

"Heteroarylsulphonylcarbamoyl" means a heteroaryl-$SO_2$-NH-CO- group wherein heteroaryl is defined herein.

"Heterocyclenyl" means a non-aromatic monocyclic or multicyclic ring system of about 3 to about ring atoms, preferably about 5 to about 10 ring atoms, in which one or more of the atoms in the ring system is/are element(s) other than carbon, for example nitrogen, oxygen or sulfur atoms, and which contains at least one carbon-carbon double bond or carbon-nitrogen double bond. Preferred heterocyclenyl rings contain about 5 to about 6 ring atoms. The prefix aza, oxa or thia before heterocyclenyl means that at least a nitrogen, oxygen or sulfur atom respectively is present as a ring atom. The heterocyclenyl may be optionally substituted by one or more ring system substituents, wherein "ring system substituent" is as defined herein. The nitrogen or sulphur atom of the heterocyclenyl is optionally oxidized to the corresponding N-oxide, S-oxide or S,S-dioxide. Representative monocyclic azaheterocyclenyl groups include 1,2,3,4- tetrahydropyridine, 1,2-dihydropyridyl, 1,4-dihydropyridyl, 1,2,3,6-tetrahydropyridine, 1,4,5,6-tetrahydropyrimidine, 2-pyrrolinyl, 3-pyrrolinyl, 2-imidazolinyl, 2-pyrazolinyl, and the like. Representative oxaheterocyclenyl groups include 3,4-dihydro-2H-pyran, dihydrofuranyl, fluorodihydrofuranyl, and the like. A representative multicyclic oxaheterocyclenyl group is 7-oxabicyclo[2.2.1]heptenyl. Representative monocyclic thiaheterocyclenyl rings include dihydrothiophenyl, dihydrothiopyranyl, and the like

"Heterocyclyl" means a non-aromatic saturated monocyclic or multicyclic ring system of about 3 to about 10 ring atoms, preferably about 5 to about 10 ring atoms, in which one or more of the atoms in the ring system is/are element (s) other than carbon, for example nitrogen, oxygen or sulfur. Preferred heterocyclyls contain about 5 to about 6 ring atoms. The prefix aza, oxa or thia before heterocyclyl means that at least a nitrogen, oxygen or sulfur atom respectively is present as a ring atom. The heterocyclyl is optionally substituted by one or more "ring system substituents" which may be the same or different, and are as defined herein. The nitrogen or sulphur atom of the heterocyclyl is optionally oxidized to the corresponding N-oxide, S-oxide or S,S-dioxide. Representative monocyclic heterocyclyl rings include piperidyl, pyrrolidinyl, piperazinyl, morpholinyl, thiomorpholinyl, thiazolidinyl, 1,3-dioxolanyl, 1,4-dioxanyl, tetrahydrofuranyl, tetrahydrothiophenyl, tetrahydrothiopyranyl, and the like.

"Heterocyclylalkyl" means a heterocyclyl-alkylene- group wherein heterocyclyl and alkylene are defined herein. Preferred heterocyclylalkyls contain a lower alkylene moiety. A representative heteroaralkyl group is tetrahydropyranylmethyl.

"Heterocyclylalkyloxyalkyl" means a heterocyclylalkyl-O-alkylene group wherein heterocyclylalkyl and alkylene are defined herein. A representative heterocyclylalkyloxyalkyl group is tetrahydropyranylmethyloxymethyl.

"Heterocyclyloxy" means a heterocyclyl-O- group wherein heterocyclyl is defined herein. Representative heterocyclyloxy groups include quinuclidyloxy, pentamethylenesulfideoxy, tetrahydropyranyloxy, tetrahydrothiophenyloxy, pyrrolidinyloxy, tetrahydrofuranyloxy, 7-oxabicyclo[2.2.1]heptanyloxy, hydroxytetrahydropyranyloxy, hydroxy-7-oxabicyclo[2.2.1]heptanyloxy, and the like.

"Hydroxyalkyl" means an alkyl group as defined herein substituted with one or more hydroxy groups. Preferred hydroxyalkyls contain lower alkyl. Representative hydroxyalkyl groups include hydroxymethyl and 2-hydroxyethyl.

"N-oxide" means a

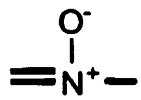

group.

"Phenoxy" means a phenyl-O- group wherein the phenyl ring is optionally substituted with one or more ring system substituents as defined herein.

"Phenylene" means a -phenyl- group wherein the phenyl ring is optionally substituted with one or more ring system substituents as defined herein.

"Phenylthio" means a phenyl-S- group wherein the phenyl ring is optionally substituted with one or more ring system substituents as defined herein.

"Pyridyloxy" means a pyridyl-O- group wherein the pyridyl ring is optionally substituted with one or more ring system substituents as defined herein.

"Ring system substituent" means a substituent attached which optionally replaces hydrogen on an aromatic or non-aromatic ring system. Ring system substituents are selected from the group consisting of aryl, heteroaryl, aralkyl, heteroaralkyl, hydroxy, hydroxyalkyl, alkoxy, aryloxy, aralkoxy, acyl, aroyl, halo, nitro, cyano, carboxy, alkoxycarbonyl, aryloxycarbonyl, aralkoxycarbonyl, alkylsulfonyl, arylsulfonyl, heteroarylsulfonyl, alkylsulfinyl, arylsulfinyl, heteroarylsulfinyl, alkylthio, arylthio, heteroarylthio, aralkylthio, heteroaralkylthio, cycloalkyl, cycloalkenyl, heterocyclyl, heterocyclenyl, aryldiazo, heteroaryldiazo, amidino, amino, aminoalkyl, carbamyl and sulfamyl. When a ring system is saturated or partially saturated, the "ring system substituent" further comprises methylene ($H_2C$=), oxo (O=) and thioxo (S=).

"Sulfamyl" means a group of formula $Y^1Y^2NSO_2$- wherein $Y^1$ and $Y^2$ are defined herein. Representative sulfamyl groups are aminosulfamoyl ($H_2NSO_2$-) and dimethylaminosulfamoyl ($Me_2NSO_2$-).

Preferred Embodiments

In a preferred aspect of this invention, the $^{19}F$ NMR spectra are obtained using magic angle spinning.

In order to calculate the amounts of reagents for use in subsequent reactions and for optimization of the subsequent chemistry, it is necessary to determine the loading of the fluorine-containing solid-phase reaction product.

In this invention, the solid-phase reaction is quantitated using an internal standard comprising a fluorine-containing solid-phase reaction component as defined herein.

The determination of resin loading using an internal standard is determined by comparing the integrals of the $^{19}F$ resonance(s) of the fluorine-containing solid-phase reaction component with the $^{19}F$ resonance(s) of the fluorine-containing solid-phase reaction product.

A preferred internal standard for use in the method of this invention are fluorine-containing solid-phase reaction components formula I

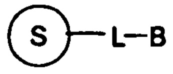

I

wherein

ⓢ is a solid support containing one or more fluorine atoms;

L is absent or a linking group optionally containing one or more fluorine atoms; and

B is a functional group suitable for reaction with a reactant to form a fluorine-containing solid-phase reaction product.

Fluorine-containing solid-phase reaction components in which the solid support contains one or more fluorine atoms are designated herein by formula II

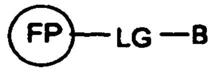

II

wherein

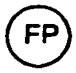 is a solid support containing one or more fluorine atoms;

LG is absent or a linking group optionally substituted by one or more fluorine atoms; and

B is a functional group suitable for reaction with a reactant to form a fluorine-containing solid-phase reaction product.

Fluorine-containing solid-phase reaction components of formula II are prepared by polymerization using methods known in the art so as to incorporate one or more fluorine-containing monomers into the solid support. Representative fluorine-containing monomers include 4-fluorostyrene, 4-trifluoromethylstyrene, and the like.

Preferred fluorine-containing solid-phase reaction components of formula II are prepared by copolymerizing mixtures of 4-fluorostyrene, 1,4-divinylbenzene and 4-vinylbenzylchloride.

In a preferred aspect, the fluorine-containing solid-phase reaction component is prepared by reacting the solid-phase reaction component with about 0.05 to about 1.5 molar equivalents of the fluorine-containing reactant.

Representative fluorine-containing reactants suitable for reaction with the solid-phase reaction component to form the fluorine-containing solid-phase reaction component include bis(2,2,2-trifluoroethyl)amine, 3,5-bis(trifluoromethyl)benzoyl chloride, 4-fluorobenzoyl chloride, 4-fluorobenzylamine, 4-fluorobenzenesulfonyl chloride, 4-fluorobenzaldehyde, 4-fluorophenylchloroformate, 3-fluorophenyl isocyanate, 4-fluorophenylisothiocyanate, trifluoroacetic anhydride, trifluoromethanesulfonic anhydride, 4-(trifluoromethyl)benzylamine, 4-(trifluoromethyl)benzyl bromide, 4-(trifluoromethyl)phenylhydrazine, 4-(trifluoromethyl)phenyl isocyanate, 4-(trifluoromethyl)thiophenol, 1H, 1H, 2H, 2H-perfluorodecyldimethylchlorosilane, 2,2,2-trifluoroethanesulfonyl chloride, 2,2,2,-trifluoroethanol, 4-fluorophenol, 4-fluorobenzoic acid, 1,2-epoxy-3-fluoropropane, 4-fluoro-4-hydroxybenzophenone, 2-fluoro-4-hydroxybenzoic acid, 2-fluoro-4-hydroxybenzyl alcohol, 2-fluoro-4-hydroxybenzyl chloride, and the like. A preferred fluorine-containing reactant is 4-fluorophenol.

Preferred fluorine-containing solid-phase reaction components according to the method of this invention have formula III wherein

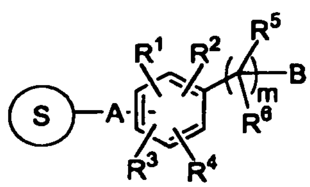

III

L is a group of formula

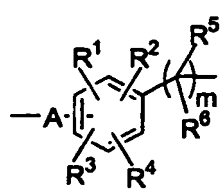

;

A is absent or is selected from

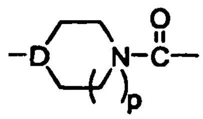 , 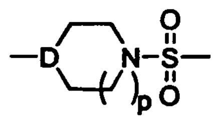 , 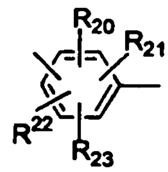 ,

-C(O)-, -YC(O)-, $-SO_2-$, $-NR^7SO_2-$, $-CHR^7-$, $-CHR^7Y$ - and $-CHR^7YC(O)(CH_2)_m-$;
B is halogen, NHP, OW or $SO_2Z$;
DisCHorN;
P is H or an amine protecting group;
W is H, NHP, $NPR^9$, NC(O)Cl, $C(O)R^9$, $C(O)NR^{10}R^{11}$, $C(O)OR^9$, $SO_2R^9$ or C(O)-imidazol-1-yl;
Y is -O- or $-NR^8-$;
Z is Cl, OH, $OR_a$ or $NR^9R^{12}$;
$R^1$ is F, or when one of $R^{16}$, $R^{17}$, $R^{18}$ and $R^{19}$ is F, $R^1$ is H, alkyl, alkoxy, halogen, CN or $NO_2$;
$R^2$ $R^3$ and $R^4$ are independently H, alkyl, alkoxy, halogen, CN or $NO_2$;
$R^5$ and $R^6$ are independently -H, alkyl, phenyl or phenyl substituted with one or more substituents selected from alkyl, alkoxy, halogen, nitrile and $-NO_2$;
or one of $R^1$, $R^2$ and $R^4$, together with one of $R^5$ and $R^6$ and the carbon atoms to which they are attached, form a ring structure such that L is a group of formula

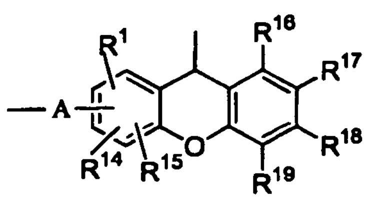 ;

$R^7$ and $R^8$ are independently H or lower alkyl;
$R^9$ and $R^{13}$ are independently aliphatic or aromatic;
$R^{10}$ and $R^{11}$ are independently H, aliphatic or aromatic;
$R^{12}$ is $-CH_2R^{13}$;
$R^{14}$, $R^{15}$, $R^{16}$, $R^{17}$, $R^{18}$, $R^{19}$, $R^{20}$, $R^{21}$, $R^{22}$ and $R^{23}$ are independently selected from H, alkyl, alkoxy, halogen, -CN and $-NO_2$;
m is 0 or 1;
p is 0, 1 or 2.

The preparation of fluorine-containing solid-phase reaction components of formula III for use according to the method of this invention is described in Schemes 1-7 below. The preparation and use of fluorine-containing solid-phase reaction components of formula III in which B is ONHP or $ONPR^9$ in the preparation of aldehyde, ketone, oxime, amine, and hydroxamic acid compounds is described in PCT/US97/23920. The preparation and use of fluorine-containing solid-phase reaction components of formula III in which B is OW or $SO_2Z$ wherein W is H, NC(O)Cl, $C(O)R^9$, $C(O)NR^{10}R^{11}$, $C(O)OR^9$, $SO_2R^9$ or C(O)-imidazol-1-yl in the preparation of amides, peptides, hydroxamic acids, amines, urethanes, carbonates, carbamates, sulfonamides and α-substituted carbonyl compounds is described in U.S. patent application ser. No.: 60/090,558, filed June 24, 1998.

The preparation of the solid-phase reaction component of formula

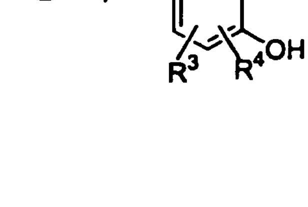

is shown in Scheme 1.

Scheme 1

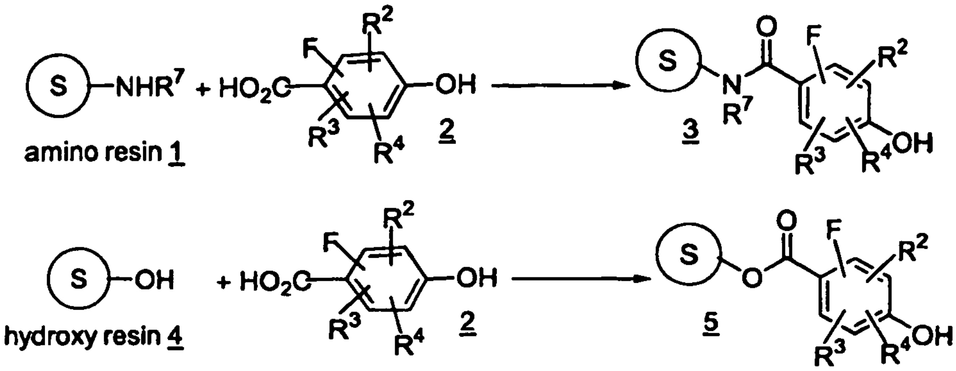

amino resin 1; 2; 3

hydroxy resin 4; 2; 5

Ⓢ, $R^2$, $R^3$, $R^4$ and $R^7$ are as defined herein

According to the foregoing Scheme 1, amino resin 1 or hydroxy resin 4 is coupled with the 4-hydroxyfluorobenzoic acid derivative 2 in a suitable organic solvent such as dichloromethane, DMF, DMSO or THF to form the 4-hydroxy fluorine-containing solid-phase reaction components 3 or 4-hydroxyfluorobenzoyloxy resin compound 5. Coupling times range from about 2 to about 24 hours, depending upon the amino resin and 4-hydroxyfluorobenzoic acid derivative to be coupled, activating agent, solvent and temperature. The coupling is accomplished at from about -10 ˚C to about 50 ˚C, preferably at about ambient temperature. The carboxylic acid moiety is activated with an appropriate activating agent such as isopropyl chloroformate in the presence of N-methylpiperidine, diisopropylcarbodiimide (DIC) in the presence of 1-hydroxybenzotriazole (HOBT), diisopropylcarbodiimide (DIC) in the presence of 4-dimethylaminopyridine (DMAP), bis(2-oxo-3-oxazolidinyl)-phosphonic chloride (BOP-Cl) in the presence of triethylamine, 2-(1H-benzotriazole-1-yl)-1,1,3,3-tetramethyluronium tetrafluoroborate (TBTU) in the presence of diisopropylethyl amine, N-hydroxysuccinimide in the presence of N,N'-dicyclohexylcarbodiimide (DCC), and the like.

A preferred hydroxy resin 4 is hydroxymethyl resin.

The preparation of the solid-phase reaction component of formula

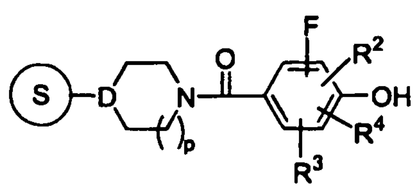

wherein D, p, $R^2$, $R^3$ and $R^4$ are defined herein is shown in Scheme 2.

Scheme 2

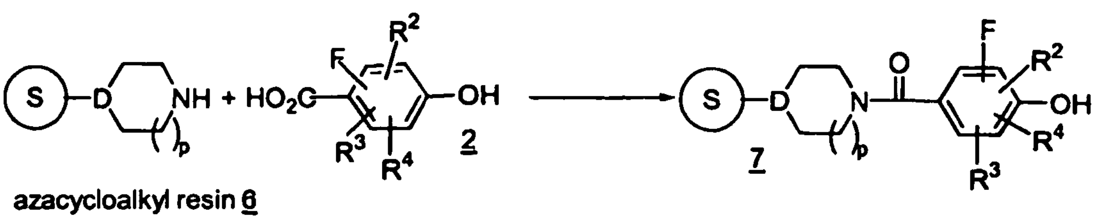

2; 7

azacycloalkyl resin 6

As shown in the Scheme 2 above, coupling of the azacycloalkyl resin compound 6 with the 4-hydroxyfluorobenzoic acid compound 2 provides the 4-hydroxyfluorobenzoyl-azacycloalkyl resin compound 7. The coupling is accomplished using the reagents and conditions described in Scheme 1 above. The preparation the solid-phase reaction

component of formula

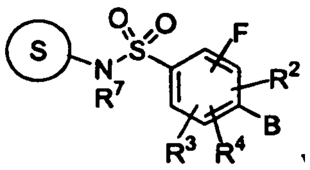

wherein B is F or OH is outlined in Scheme 3.

**Scheme 3**

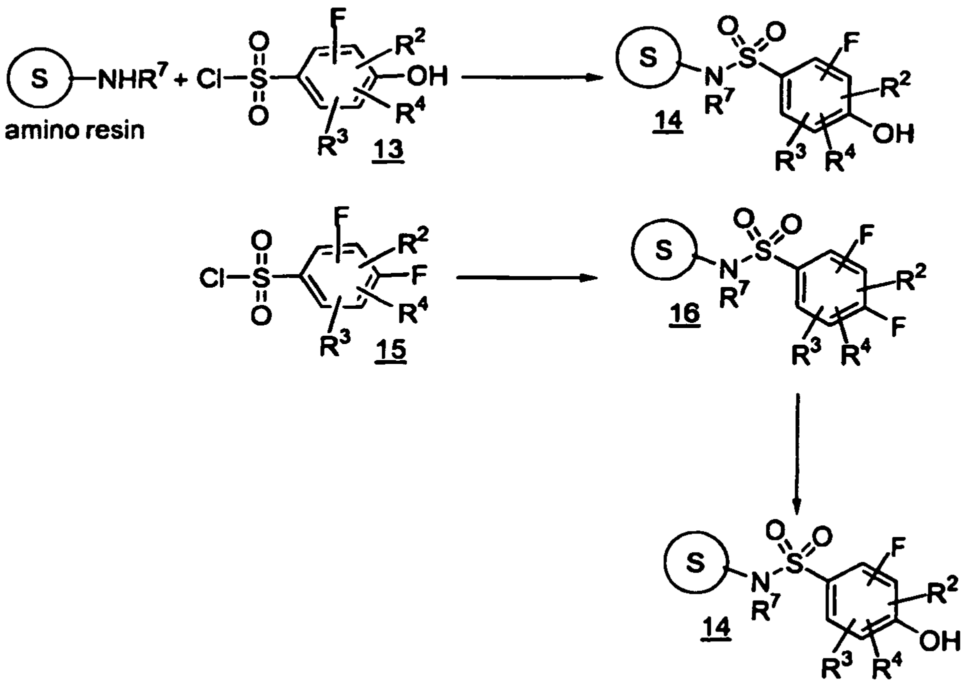


As shown in Scheme 3, reaction of amino resin 1 with the 4-hydroxyfluorophenylsulfonyl chloride compound 13 in the presence of base such as N-methylmorpholine, pyridine, collidine, triethylamine or diisopropylethylamine in a suitable organic solvent such as dichloromethane, dichloroethane, dioxane, THF or DMF, provides the 4-hydroxyfluorophenylsulfonamide resin compound 14. The reaction is preferably conducted in dichloromethane in the presence of collidine.

The preparation of the solid-phase reaction component of formula

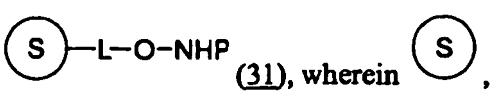
(31), wherein

L and P are defined herein, is shown in Scheme 4.

**Scheme 4**

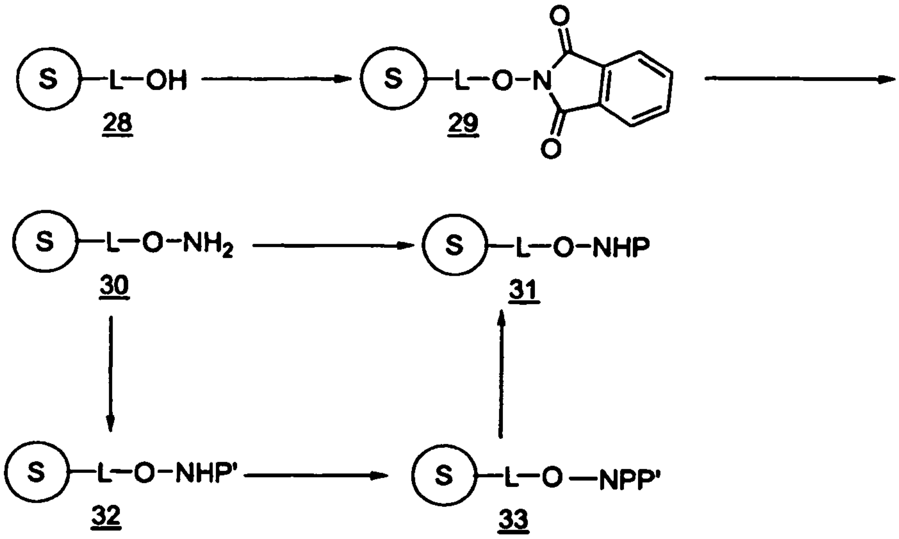


According to the foregoing Scheme 4, a polymeric hydroxy resin compound 28 is converted to the polymeric N-hydroxyphthalimido resin compound 29 by coupling with N-hydroxyphthalimide under Mitsunobu conditions (Mitsunobu, O., Synthesis 1981, 1); by conversion of the hydroxy group to a leaving group such as the mesylate followed by nucleophilic displacement with N-hydroxyphthalimide; or by reaction of the polymeric hydroxy resin compound with N-hydroxyphthalimide in the presence of an acid such as benzenesulfonic acid. Removal of the phthalimido group using techniques commonly known in the art such as treatment of 29 with hydrazine, or preferably methylamine, provides the fluorine-containing solid-phase reaction component 30 in which P is H.

For example, coupling of 28 with N-hydroxyphthalimide is accomplished in the presence of diisopropylazodicarboxylate and triphenylphosphine in DMF. The phthalimido protection is then removed by methylaminolysis in THF at about 40 °C.

Introduction of an amine protecting group such as benzyl using reagents and reaction conditions commonly known in the art provides the fluorine-containing solid-phase reaction component 31 in which P is an amine protecting group.

In certain instances, the attempted introduction of certain amine protecting groups to the fluorine-containing solid-phase reaction component 30 results in diprotection of the N atom. Diprotection is preferably avoided by selective mono-protection of 30 with a protecting group P', to form the mono-N-protected fluorine-containing solid-phase reaction component 32, followed by introduction of the protecting group P to form the N,N-diprotected fluorine-containing solid-phase reaction component 33 and selective removal of P'. A preferred protecting group P' is allyloxycarbonyl which is selectively cleaved in the presence of additional amine protecting groups by Pd(0).

An alternative route to the solid-phase reaction component 31 is outlined in Scheme 5.

**Scheme 5**

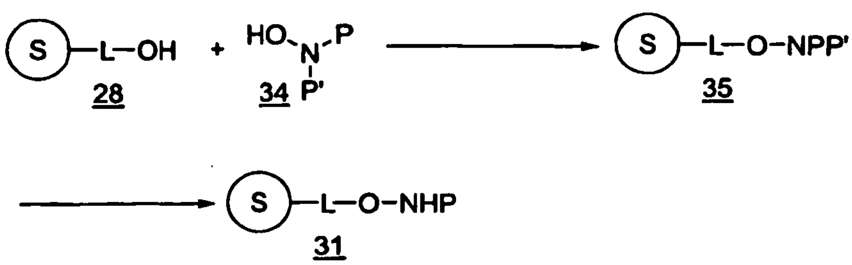


According to the foregoing Scheme 5, the solid-phase reaction component 30 is coupled with a N,N-diprotected

hydroxylamine compound 34, wherein P and P' are amine protecting groups to form the N,N-diprotected fluorine-containing solid-phase reaction component 35. The amine protecting group P' is then selectively removed to form the N-protected fluorine-containing solid-phase reaction component 31.

In a preferred embodiment of the synthesis described in Scheme 5, P is benzyl and P' is allyloxycarbonyl. Selective removal of the allyloxycarbonyl protecting group is effected by treatment with tetrakis(triphenylphosphine) Palladium(0).

The N,N-diprotected hydroxylamine compound 34 is prepared by sequential introduction of the protecting groups P and P' to an O-protected hydroxylamine compound of formula $H_2NOP^2$ wherein $P^2$ is a hydroxy protecting group. A preferred hydroxy protecting group is alkyl. The amine protecting groups P and P' are then introduced using reagents and reaction conditions well known in the art of organic synthesis. For Example, reaction of O-*tert*-butylhydroxylamine with allyloxychloroformate results in formation of N-allyloxycarbonyl-O-*tert*-butylhydroxylamine, which is then reacted with benzyl bromide to form N-benzyl-N-allyloxycarbonyl-O-*tert*-butylhydroxylamine. Treatment of N-benzyl-N-allyloxycarbonyl-O-*tert*-butylhydroxylamine with trifluoroacetic acid gives N-benzyl-N-allyloxycarbonylhydroxylamine.

The preparation of a solid-phase reaction component of formula

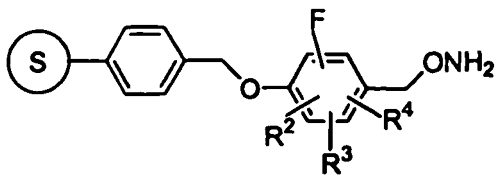

is shown in Scheme 6.

**Scheme 6**

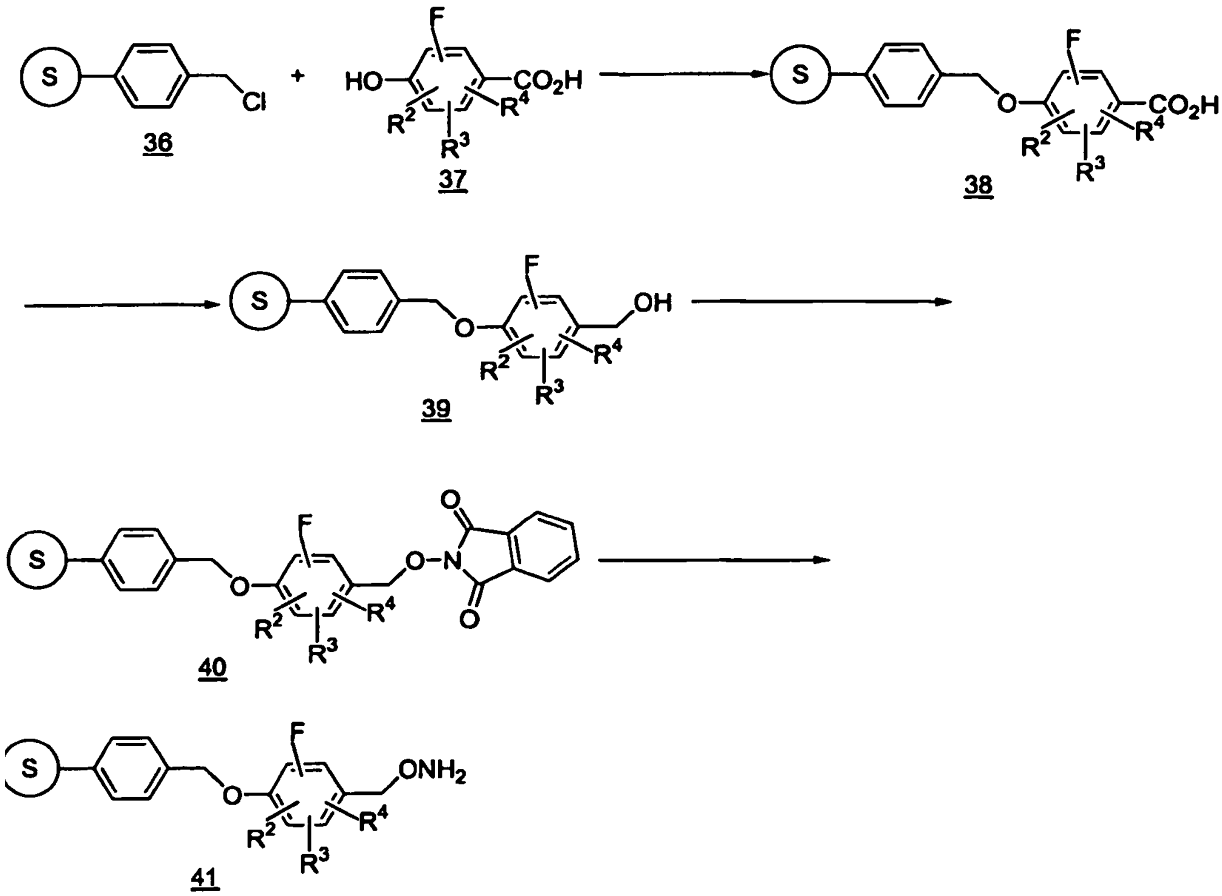

36 37 38 39 40 41

According to the foregoing Scheme 6, a polymeric chloromethyl resin compound is reacted with 4-hydroxyfluorobenzoic acid compound 37 in the presence of base to form the 4-carboxyfluorophenoxymethyl resin compound 38. Reduction of the carboxylic acid group, for example using $LiAlH_4$, diisobutylaluminum hydride, or $BH_3$-THF provides the 4-hydroxymethylfluorophenoxymethyl resin compound 39. Conversion of 39 to the hydroxyphthalimido resin compound 40, followed by removal of the phthalimido group as described in Scheme 7 above provides the fluorine-containing solid-phase reaction component 41.

The preparation of a solid-phase reaction compound of formula

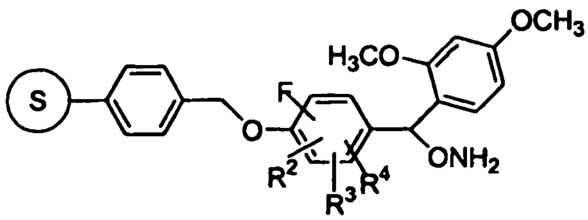

is shown in Scheme 7.

Scheme 7

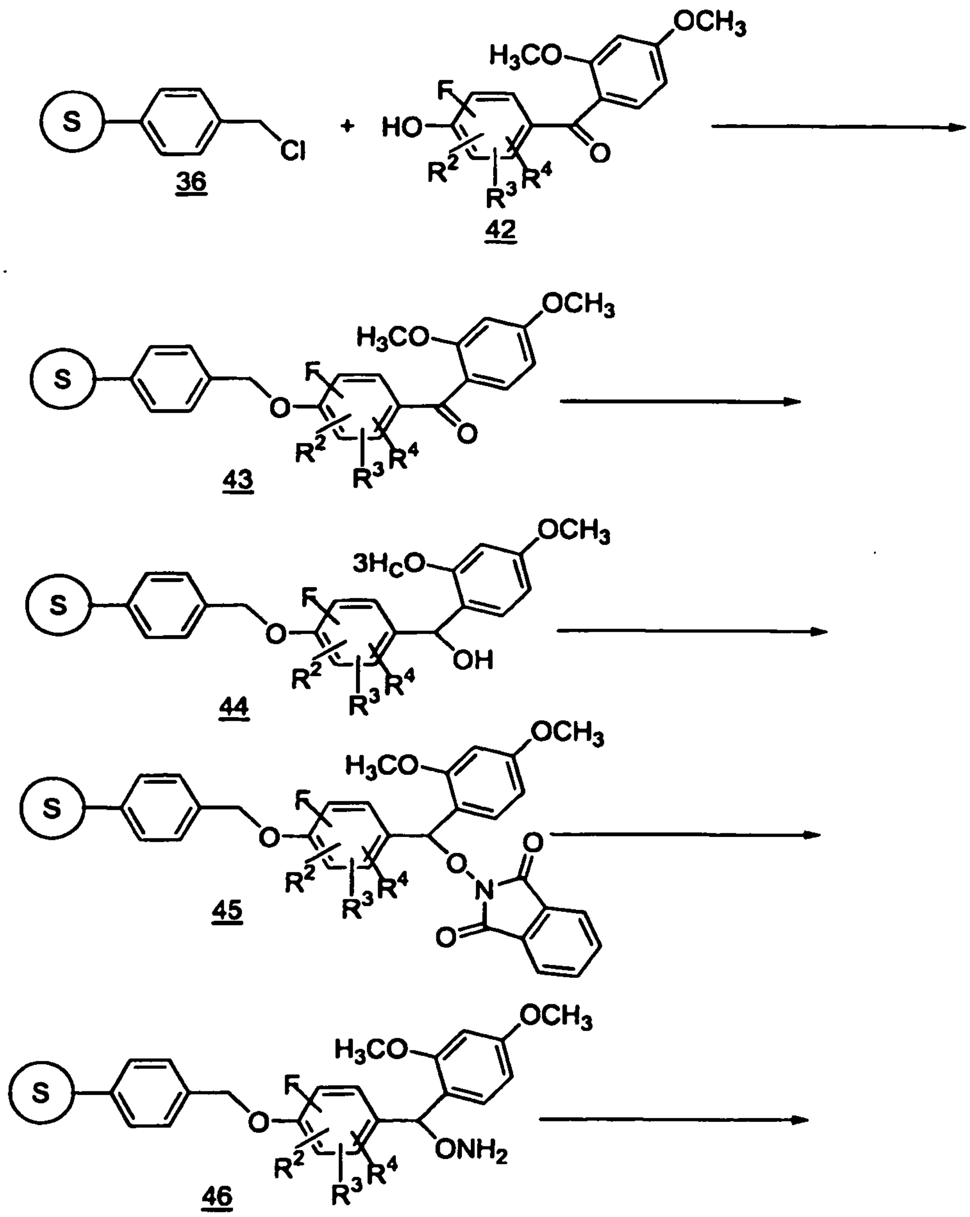

36 42 43 44 45 46

According to the foregoing Scheme 7, a polymeric chloromethyl resin compound 36 is reacted with a ketone 42 in the presence of base as described in Scheme 9 above to form the 4-(2',4'-dimethoxyphenylcarbonyl)-fluorophenoxymethyl-resin compound 43. Reduction of the carbonyl, for example using $LiBH_4$, provides the 4-(hydroxymethyl-2',4'-dimethoxyphenyl)-fluorophenoxymethyt resin compound 44. Conversion of 44 to the hydroxyphthalimido resin compound 45, followed by removal of the phthalimido group as described in Scheme 4 above provides the solid-phase reaction component 46.

Still more preferred solid-phase reaction components for use according to the method of this invention have formula I wherein $R^1$, $R^2$, $R^3$ and $R^4$ are F; one of $R^5$ and $R^6$ is H and the other of $R^5$ and $R^6$ is 2,4-dimethoxyphenyl; and A is phenylene, -C(O)-, -YC(O)-, $-SO_2-$, $-NR^7SO_2-$ or $-CHR^7O-$.

The use of $^{19}F$ NMR to quantify and monitor the preparation of fluorine-containing activated ester solid-phase reaction product of formula

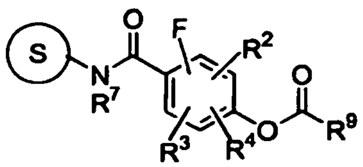

is shown in Scheme 8.

**Scheme 8**

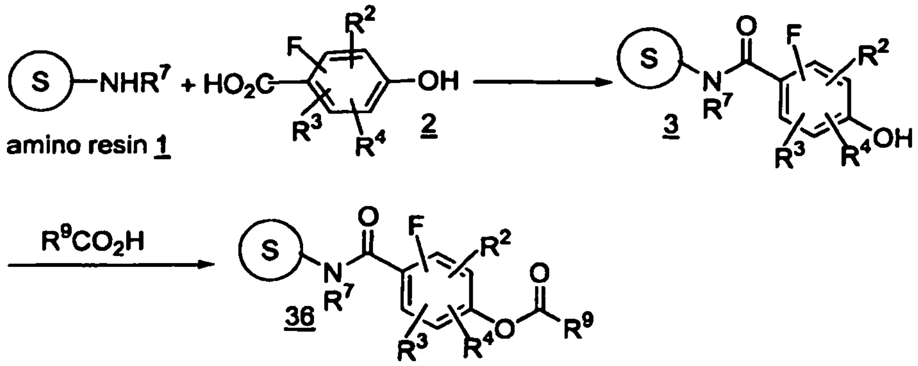


As shown in the foregoing scheme 8, the first step in the preparation of the fluorine-containing activated ester solid-phase reaction component consists of loading aminomethyl resin 1 with the 4-hydroxyfluorobenzoic acid derivative 2 as described in Scheme 1 above. The level of resin loading to the amino resin 1 is determined as described above.

The second step in the preparation of the fluorine-containing activated ester solid-phase reaction component 36 is coupling of the 4-hydroxy fluorine-containing solid-phase reaction component 3 with a carboxylic acid compound of formula $R^9CO_2H$. Coupling times range from about 2 to about 24 hours depending on the nature of the 4-hydroxy fluorine-containing solid-phase reaction component 3, the carboxylic acid compound $R^9CO_2H$, solvent, reaction temperature and activating agent. Coupling is preferably accomplished using diisopropylcarbodiimide (DIC) in the presence of catalytic 4-dimethylaminopyridine (DMAP) in a suitable solvent such as benzene, dichloromethane, dichloroethane, dioxane, THF or DMF at about ambient temperature over about 18 hours. A preferred solvent is anhydrous DMF. The fluorine-containing activated ester solid-phase reaction component 36 is then washed with a suitable organic solvent or solvents to remove excess reagents.

The coupling reaction described above results in down-field shift of the $^{19}F$ resonances in the fluorine-containing activated ester solid-phase reaction component 36 relative to the 4-hydroxy fluorine-containing activated ester solid-phase reaction component 3. Consequently, loading of the carboxylic acid compound $R^9CO_2H$ can be determined by comparison of relative integral values of the $^{19}F$ resonances corresponding to the activated ester and phenol moieties. These measurements are independent of resin quantity and total sample volume.

In a similar fashion, subsequent reactions performed on the fluorine-containing activated ester solid-phase reaction component 36 can be quantifed using the techniques described above. For example, the fluorine-containing activated ester solid-phase reaction component 36 can be cleaved with an amine of formula $HNR^{24}R^{25}$, wherein $R^{24}$ and $R^{25}$ are H, aliphatic or aromatic, to form an amide of formula 37 with concomitant regeneration of the 4-hydroxy fluorine-containing activated ester solid-phase reaction component 3 as shown in Scheme 9.

Scheme 9

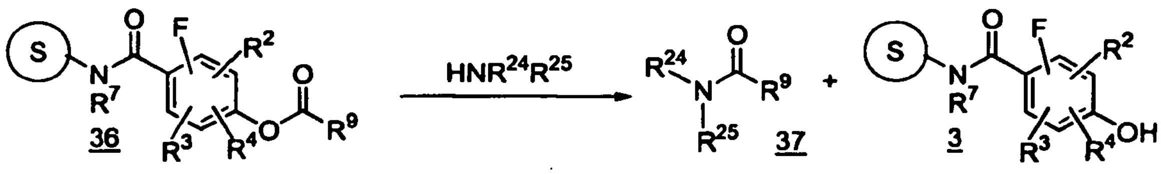


The reaction described in Scheme 9 above is quantified by comparison of relative integral values of the $^{19}F$ resonances corresponding to fluorine-containing activated ester solid-phase reaction component 36 and 4-hydroxy fluorine-containing solid-phase reaction component 3.

In a similar fashion, the progress of a solid-phase reaction over time may be monitored by periodically obtaining a $^{19}F$ NMR spectrum of the reaction mixture and monitoring the disappearance of the $^{19}F$ resonances corresponding to the fluorine-containing solid-phase reaction component.

Solid-phase synthetic techniques are used extensively in the preparation of peptides. Peptide synthesis on solid supports generally involves building a peptide from the carboxyl or C-terminal end in which the C-terminal amino acid with its $\alpha$-amino group protected is attached to a solid-phase polymer. The N-protecting group is then cleaved off, and the next amino acid, also N-protected, is coupled by a peptide bond to the $\alpha$-amino group of the amino acid attached to the solid support as described above. The cycle of deprotection of the prior amino acid and coupling the additional amino acid is repeated until the peptide is completed. Any reactive side chains of the amino acids are protected by chemical groups that can withstand the coupling and $N^{\alpha}$-deprotection procedure but can be removed at the end of the synthesis.

The yield of any of the coupling reactions utilized in the peptide synthesis described above have heretofore been determined by cleaving a sample of the peptide from the resin, purifying the peptide and calculating the yield. By using the $^{19}F$ NMR methodology described herein, the yield is determined simply by comparing the $^{19}F$ resonances of the starting and product resin-bound peptide at each step of the synthesis.

It is to be understood that this invention covers all appropriate combinations of the particular and preferred groupings referred to herein.

The foregoing may be better understood by reference to the following examples, which are presented for illustration. Examples 1-12 use solid supports that do not contain fluorine atoms and are therefore outside the scope of the invention.

Fluorine NMR

Unless otherwise indicated, $^{19}F$ NMR experiments are carried out on a Varian Unityplus spectrometer operating at a $^{19}F$ frequency of 470.228 MHz. The $^{1}H$ nanoprobe is tuned to $^{19}F$ frequency. Typically, spectra are acquired with a (delay-pulse-acquire) sequence repeated for nt transients. Typical spectral width is 100,000Hz and the chemical shifts are referenced relative to $CFCl_3$ using the transmitter frequency. The spectra are acquired using a Nanoprobe in which the sample is oriented at a magic angle (54.7 degrees) relative to the magnetic field and the sample is spun at a rate of 1000-1500Hz. The samples are prepared by swelling an accurately weighed 2-3 mg sample of fluorine-containing solid-phase reaction product with about 40 $\mu$L of deuterated dimethylformamide (DMF).

EXAMPLE 1

Preparation of 4-hydroxy-2,3,5,6-tetrafluorobenzamidomethyl-copoly(styrene-1%-divinylbenzene)-resin.

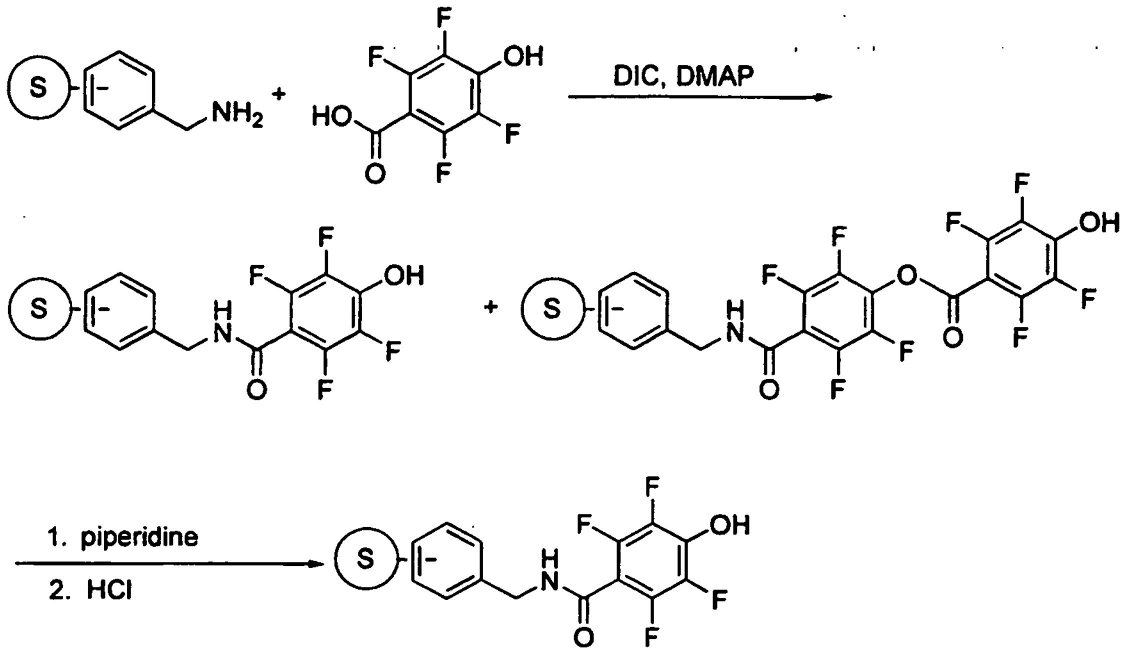


To a stirred slurry of aminomethyl polystyrene (0.82 mmol/g, 800 g, 656 mmol) in DMF (8 L) is added a solution of 2,3,5,6-tetrafluoro-4-hydroxybenzoic acid (234 g, 984 mmol) in DMF (1 L), a solution of 1-hydroxybenzotriazote (133 g, 984 mmol) in DMF (250 mL) and diisopropylcarbodiimide (124 g, 984 mmol) and the mixture is stirred overnight at ambient temperature. The reaction mixture is then filtered and the resin washed with DMF (1 x 1 L; 5 x 2 L), THF (3 x 2 L; 2 x 3 L) and $CH_2Cl_2$ (3 x 3 L). The resin is then air-dried in trays for 2 days.

The resin (995 g) is then added to a mixture of piperidine (125 mL) and DMF (6 L). DMF (2 L) is added to facilitate stirring and the mixture is stirred for 1 hour. The mixture is then filtered and the resin is washed with DMF (10 x 500ml) and dried *in vacuo.*

The resin is then suspended in DMF (4 L) and a solution of 2M HCl (750 mL) in DMF (2 L) is added and the mixture is stirred for 0.5 hours. The resin is then filtered, washed with DMF (10 L) and THF (10 L) and dried overnight *in vacuo* at ambient temperature.

EXAMPLE 2

Preparation of 2,3,4,5,6-pentafluorobenzoyl-copoly(styrene-1 %-divinylbenzene)-resin.

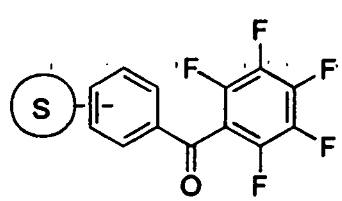

To a mixture of copoly(styrene- 1%-divinylbenzene) resin (100-200 mesh, 10 g) and pentafluorobenzoyl chloride (25 g) in nitrobenzene (250 mL) is added $AlCl_3$ (1.0 M in nitrobenzene, 38 mL) and the reaction mixture is stirred at 60 ˚C for 18 hours. The reaction mixture is then poured into a mixture of DMF (30 mL), concentrated HCl (20 mL) and ice (80 g). The mixture is stirred for 30 minutes, filtered, and the resin is washed with 3:1 DMF-$H_2O$ until the washings are colorless. The resin is then washed with warm DMF and 2:1 dichloromethane-methanol (6 x) and dried *in vacuo.* $^{19}F$ NMR 8 -146.5 (2F), -157 (1F), -165.5 (2F).

EXAMPLE 3

Preparation of 4-hydroxy-2,3,5,6-pentafluorobenzoyl-copoly(styrene-1%-divinylbenzene)-resin.

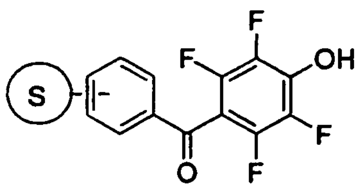

The title resin is prepared by treating a mixture of 2,3,4,5,6-pentafluorobenzoyl-copoly(styrene-1%-divinylbenzene)-resin in water/cyclohexane with sodium hydroxide and tetrabutylammonium hydrogen sulfate as described by Feldman et al., J. Org. Chem., 56 (26), 7350-7354 (1991).

EXAMPLE 4

Preparation of 2,3,5,6-tetrafluorobenzoyl-4-sulfonic acid-copoly(styrene-1%-divinylbenzene)-resin.

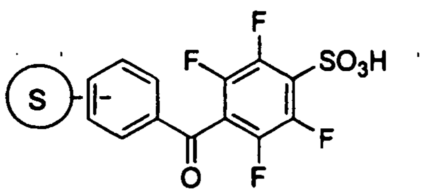

A mixture of 2,3,4,5,6-pentafluorobenzoyl-copoly(styrene-1%-divinylbenzene)-resin (325 mg), prepared as in Example 2, dichloromethane (3 mL), $H_2O$ (1 mL), triethylamine (1.2 mL) and potassium metabisulfite (560 mg) is stirred for 3 days. The resin is then washed with dichloromethane (6 x) and dried *in vacuo* at 40 ˚C. $^{19}F$ NMR δ- -142 (2F), -147 (2F).

EXAMPLE 5

Preparation of 2,3,5,6-tetrafluorobenzoyl-4-sulfonyl chloride-copoly(styrene-1%-divinylbenzene)-resin.

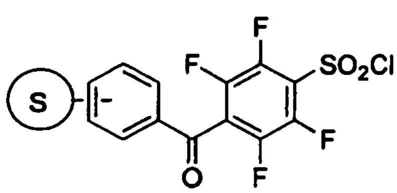

The 2,3,5,6-tetrafluorobenzene-4-sulfonic acid-copoly(styrene-1%-divinylbenzene)-resin (300 mg), prepared in Example 4, is swelled in carbon tetrachloride. (3 mL) and chlorosulfonic acid (1 mL) is added. The reaction mixture is stirred for 24 hours and then is quenched with acetic acid. The resin is filtered, washed with dichloromethane (6 x) and ether (4 x) and dried *in vacuo* at 40 ˚C. $^{19}F$ NMR δ -142 (2F), -146.5 (2F).

EXAMPLE 6

Preparation of 2,3,4,5,6-pentafluorophenylsulfonamidomethyl-copoly(styrene-1%-divinylbenzene)-resin.

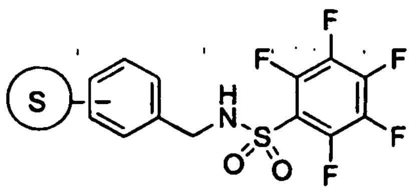

Aminomethyl polystyrene (1 g, 1.2 mmol) is swelled with dichloromethane and 2,4,6-collidine (0.475 mL, 3.6 mmol) and 2,3,4,5,6-pentafluorophenylsulfonyl chloride (1.44 mmol) are added. The reaction mixture is stirred for 5 hours and the resin is filtered, washed with dichloromethane (6x) and dried *in vacuo* at 40 ˚C.

EXAMPLE 7

Preparation of 4-hydroxy-2,3,5,6-pentafluorophenylsulfonamidomethyl-copoly(styrene-1%-divinylbenzene)-resin.

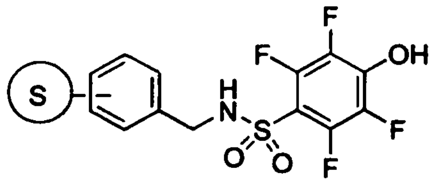

The title resin is prepared according to the method of Example 3, except substituting 2,3,4,5,6-pentafluorophenylsulfonamidomethyl-copoly(styrene-1%-divinylbenzene)-resin, prepared as in Example 17, for 2,3,4,5,6-pentafluorobenzoyl-copoly(styrene-1%-divinylbenzene)-resin.

EXAMPLE 8

4-carboxy-2,3,5,6-tetrafluorophenoxymethyl-copoly(styrene-1% divinylbenzene) resin.

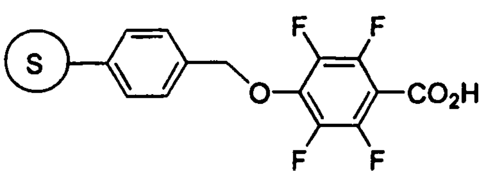

Merrifield resin (2 mmol/g, 600 mg, 1.2 mmol) is swelled in anhydrous DMF (20 mL). 2,3,5,6-tetrafluoro-4-hydroxy benzoic acid hydrate (2.28 g, 10 mmol) and cesium carbonate (3.26 g, 10 mmol) are added and the reaction mixture is heated at 85 ˚C for 12 hours with gentle agitation. The reaction mixture is filtered and the 4-carboxy-2,3,5,6-tetrafluorophenoxymethyl-copoly(styrene-1% divinylbenzene) resin is washed with DMF (5x), 20% aqueous DMF (5x), THF (5x) and dichloromethane and dried overnight *in vacuo.* IR (microscope, cm-1): 1640 (C=O); $^{19}F$ NMR (nanoprobe) -144.4 ppm, -160.2 ppm.

EXAMPLE 9

Determination of loading of aminomethyl resin with 2,3,5,6-tetrafluoro-4-hydroxybenzoic acid (TFP) using $^{19}F$ NMR.

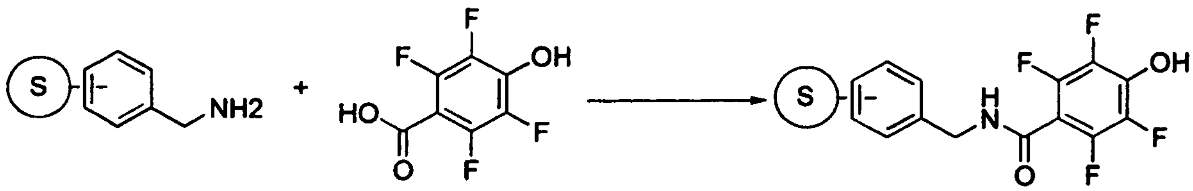

The loading of 4-hydroxy-2,3,5,6-tetrafluorobenzamidomethyl-copoly(styrene-1%-divinylbenzene)-resin is determined obtaining the $^{19}F$ NMR spectrum of a sample consisting of a mixture of 3-fluorobenzamide and 4-hydroxy-2,3,5,6-tetrafluorobenzamidomethyl-copoly(styrene-1%-divinylbenzene)-resin. The integrals of the $^{19}F$ resonances corresponding to 3-fluorobenzamide and 4-hydroxy-2,3,5,6-tetrafluorobenzamidomethyl-copoly(styrene-1%-divinylbenzene)-resin are measured and the loading of the resin is then calculated using formula 1.

The $^{19}F$ NMR spectrum is acquired at ambient temperature on a Varian UnityPlus spectrometer operating at 470.23 MHz. The spectrometer is equipped with a single coil proton Nanoprobe tuned to 19F. The sample is prepared by accurately weighing 2-4 mg of resin in a sample tube. To the weighed resin is added 20 microliters of a 0.125 M solution of 3-fluorobenzamide in d7-dimethylformamide (Cambridge Isotopes), followed by sufficient d7-dimethylformamide to fill the sample tube (total solvent volume is approximately 40 microliters).

The loading of 4 samples of 4-hydroxy-2,3,5,6-tetrafluorobenzamidomethyl-copoly(styrene-1%-divinylbenzene)-resin, prepared using the coupling conditions summarized below, is determined by $^{19}F$ NMR and by combustion analysis, is summarized in Table 1. As shown in Table 1, there is excellent agreement between the resin loading determined by $^{19}F$ NMR and the resin loading as determined by combustion analysis.

Table 1

| Determination of Loading of Aminomethyl Resin with 2,3,5,6-tetrafluoro-4-hydroxybenzoic acid (TFP) using $^{19}F$ NMR. | | | |
|---|---|---|---|
| Sample | Coupling conditions | Resin Loading (mmol TFP/g resin) | |
| | | $^{19}F$ NMR | Combustion analysis |
| 1 | Initial aminomethyl resin loading 0.82 mmol/g. | 0.83 | 0.87 |
| 2 | As in Example 1; initial aminomethyl resin loading 0.39 mmol/g. | 0.27 | 0.28 |
| 3 | As in Example 1; initial aminomethyl resin loading 0.47 mmol/g. | 0.35 | 0.35 |
| 4 | As in Example 1, except 20% HCl in DMF used instead of 2N HCl/DMF; initial aminomethyl resin loading 0.47 mmol/g. | 0.35 | 0.38 |

EXAMPLE 10

General procedure for preparing 2,3,5,6-tetrafluorobenzamidomethyl-copoly(styrene-1%-divinylbenzene) activated ester resin compounds.

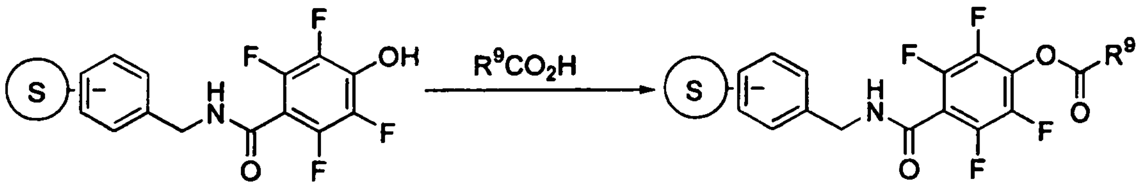


4-Hydroxy-2,3,5,6-tetrafluorobenzamidomethyl-copoly(styrene-1%-divinylbenzene)-resin (0.47 mmol/g, 0.5 g) is weighed into each of 40 20 mL Jones tubes arranged in a test tube rack and DMF (4 mL), diisopropylcarbodiimide (DIC; 0.186 mL, 5 equiv.) and 4-dimethylaminopryidine (DMAP; 43 mg, 1.5 equiv. (1 mL of a stock solution prepared by dissolving 1720 mg of DMAP in 40 mL of DMF)) are added to each tube. The carboxylic acid to be coupled (5 equiv.) is added and the test tube rack is shaken overnight at ambient temperature. The test tube rack is removed from the shaker the resin samples are filtered in two batches of 20. The resin samples are washed with DMF (5 x 5ml), THF (5 x 5ml) and $CH_2Cl_2$ (5 x 5ml) and dried overnight at 35 °C.

EXAMPLE 11

Monitoring of 4-[1-(4-trifluoromethylphenyl)-2,5-dimethylpyrrol-4-oyl]oxy-2,3,5,6-tetrafluorobenzamidomethyl-copoly (styrene-1%-divinylbenzene) formation using $^{19}F$ NMR.

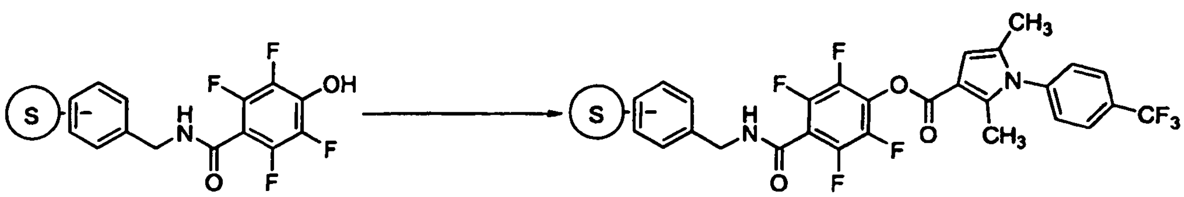

The coupling of 4-hydroxy-2,3,5,6-tetrafluorobenzamidomethyl-copoly(styrene-1%-divinylbenzene)-resin and 1-(4-trifluoromethylphenyl)-2,5-pyrrole-4-carboxylic acid, using the procedure of Example 10, is monitored using $^{19}F$ NMR by removing aliquots of the reaction at selected time periods and obtaining the $^{19}F$ NMR spectra of the aliquots. As the reaction proceeds, the $^{19}F$ resonances corresponding to the starting of 4-hydroxy-2,3,5,6-tetrafluorobenzamidomethyl-copoly(styrene-1%-divinylbenzene)-resin are replaced by the $^{19}F$ resonances corresponding to the product 4-[1-(4-trifluoromethylphenyl)-2,5-dimethylpyrrol-4-oyl]oxy-2,3,5,6-tetrafluorobenzamidomethyl-copoly(styrene-1%-divinylbenzene) resin. The $^{19}F$ NMR spectra obtained at 5, 50 and 100 minutes are reproduced in Figure 6. As shown in Figure 6, the reaction mixture consists of entirely of starting resin at 5 minutes; about equal amounts of starting resin and activated ester resin product at 50 minutes; and almost entirely activated ester resin product at 100 minutes. Exact quantification of the progress of the reaction at a given time period is obtained by integrating the starting resin and product activated ester resin $^{19}F$ resonances.

EXAMPLE 12

General procedure for cleaving 2,3,5,6-tetrafluorobenzamidomethyl-copoly(styrene-1%-divinylbenzene) activated ester resin compounds with amines.

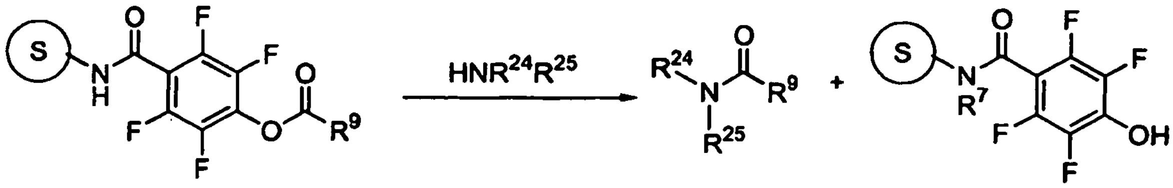

The requisite amount of 2,3,5,6-tetrafluorobenzamidomethyl-copoly(styrene-1 %-divinylbenzene) activated ester resin compounds are placed in the desired receptacle i.e. 96 well plates; reaction flasks; test-tubes, etc.

A stock solution in DMF of the desired amine is prepared in a desired container. By any suitable means, i.e. by pipette, or robotic instrument an amount of the amine stock solution is transferred to the resin reaction vessels. The amount of amine being transferred is usually 0.8 equivalents of the resin (in mmoles). The reaction vessels are then agitated for about 3 days. The mixture in the reaction vessels is then removed by pipetting or by robotic instruments to be filtered through any suitable device, such as Jones filtration tubes or through a Polyfiltronics filtration plate. These procedures allow the free resin to be retained in the filtration device, whilst permitting the reaction liquid to pass into a collection vessel, such as test tube or a 96 well plate. The filtrate is then concentrated to dryness using any suitable device such as a Turbovac; a Savant or a Genevac evaporator. This process will produce the desired compound as an amide in a form suitable for biological assay. In the case of amines that may be N-protected as Boc, etc. or have t-butyl ester groups present, these can be removed by treating the protected amide final product with a mixture of trifluoroacetic acid in methylene chloride in the presence of a trace of water.

EXAMPLE 13

Preparation of a fluorine-containing solid support.

A1L cylindrical reaction vessel is charged with 450 mL of deionized water, 4.5 g polyvinylpyrollidone and 0.5 g azoisobutyronitrile. The flask is well purged with nitrogen gas. The mixture is stirred 30 minutes at 200 rpm using a Teflon agitator, then styrene (24 mL), 4-fluorostyrene (11.4 mL), 1,4-divinylbenzene (0.6 mL) and 4-vinylbenzylchloride (13.8 mL) are added. The mixture is next stirred at 305 rpm at room temperature for I hour, then heated to 80 ˚C for 18 hours to complete the polymerization reaction. After cooling, the resin is washed with water (1.5 L), methanol (1.0 L) and dimethylformamide (2x500 mL) prior to drying *in vacuo.* Elemental analysis of the polymer resin gives 7.41 % Cl and 3.22 % F. The IR spectrum of the resin shows : 1266 $cm^{-1}$ ($-CH_2Cl$ wag) and 1223 $cm^{-1}$ (C-F stretch).

EXAMPLE 14

Preparation of a fluorine-containing solid support by modification of a pre-formed resin.

Merrifield resin (2 mmol/g, 1.0 g, 2.0 mmol) is swelled in anhydrous dimethylformamide (25 mL). A solution of 4-fluorophenol (0.7 mmol, 78 mg) and sodium hydroxide (0.75 mmol, 0.75 mL of 1.0 N aqueous solution) in 3 mL of dimethylsulfoxide is added and the reaction mixture is heated at 80 ˚C for 30 hours with gentle agitation. After cooling, the resin is washed sequentially with dimethylformamide (2 X 25 mL), 2 % aqueous HCl in dimethylformamide (1 mL in 9 mL dimethylformamide; 25 mL), dimethylformamide (2 X 25 mL), and finally $CH_2Cl_2$ (2 X 25 mL). The product is dried *in vacuo,* then stored at -5 ˚C until used.

**Claims**

**1.** A method of quantitating a solid-phase reaction comprising:

(a) initiating a solid-phase reaction between a fluorine-containing solid-phase reaction component of formula

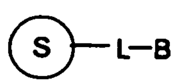

wherein
ⓢ is a solid support containing one or more fluorine atoms as an internal standard;
L is absent or a linking group optionally containing one or more fluorine atoms; and
B is a functional group suitable for reaction with a reactant or fluorine-containing reactant to form a fluorine-containing solid-phase reaction product
and a reactant or fluorine-containing reactant to form a fluorine-containing solid-phase reaction product;
(b) taking a sample of said solid-phase reaction after a predetermined time interval and obtaining a $^{19}F$ NMR spectrum of said sample; and
(c) comparing, in said $^{19}F$ NMR spectrum, the fluorine-containing solid-phase reaction product $^{19}F$ resonance to the $^{19}F$ resonance of said internal standard.

**2.** The method according to claim 1 wherein the $^{19}F$ NMR spectra are obtained using magic angle spinning.

**3.** The method according to claim 1 wherein
L is a group of formula

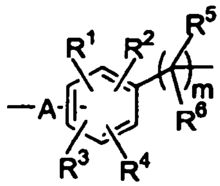
;

A is a chemical bond or is selected from

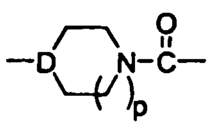
,
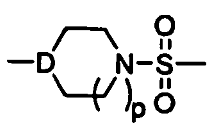
,

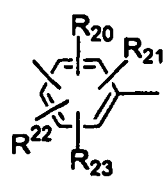
,

-C(O)-, -YC(O)-, $-SO_2-$, $-NR^7SO_2-$, $-CHR^7-$, $-CHR^7Y-$ and $-CHR^7YC(O)(CH2)_m-$;
B is halogen, NHP, OW or $SO_2Z$;
D is CH or N;
P is H or an amine protecting group;
W is H, NHP, $NPR^9$, $-NR^{10}C(O)Cl$, $C(O)R^9$, $C(O)NR^{10}R^{11}$, $C(O)OR^9$, $SO_2R^9$ or C(O)-imidazol-1-yl;
Y is -O- or $-NR^8$;
Z is Cl, OH, $OR_8$ or $NR^9R^{12}$;
$R^1$ is F, or when one of $R^{16}$, $R^{17}$, $R^{18}$ and $R^{19}$ is F, $R^1$ is H, alkyl, alkoxy, halogen, CN or $NO_2$;
$R^2$, $R^3$ and $R^4$ are independently H, alkyl, alkoxy, halogen, CN or $NO_2$;
$R^5$ and $R^6$ are independently -H, alkyl, phenyl or phenyl substituted with one or more substituents selected from alkyl, alkoxy, halogen, nitrile and $-NO_2$;
or one of $R^1$, $R^2$ and $R^4$, together with one of $R^5$ and $R^6$ and the carbon atoms to which they are attached, form a ring structure such that L is a group of formula

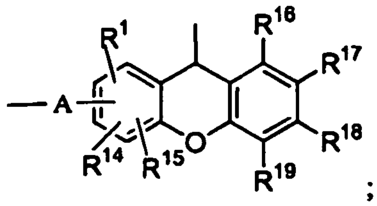

$R^7$ and $R^8$ are independently H or lower alkyl;
$R^9$ and $R^{13}$ are independently aliphatic or aromatic;
$R^{10}$ and $R^{11}$ are independently H, aliphatic or aromatic;
$R^{12}$ is $-CH_2R^{13}$;
$R^{14}$, $R^{15}$, $R^{16}$, $R^{17}$, $R^{18}$ $R^{19}$, $R^{20}$, $R^{21}$, $R^{22}$ and $R^{23}$ are independently selected from H, alkyl, alkoxy, halogen, -CN and $-NO_2$;
m is 0 or 1; and p is 0, 1 or 2.

**4.** The method according to claim 3 wherein $R^1$, $R^2$, $R^3$ and $R^4$ are F; and one of $R^5$ and $R^6$ is H and the other of $R^5$ and $R^6$ is H or 2,4-dimethoxyphenyl.

**5.** The method according to claim 4 wherein B is F, OW or $SO_2Z$.

**6.** The method according to claim 5 wherein A is phenylene, -C(O)-, -YC(O)-, $-SO_2-$, $-NR^7SO_2-$ or $-CHR^7O-$.

## Patentansprüche

**1.** Verfahren zur Quantifizierung einer Festphasenreaktion, bei dem man:

(a) eine Festphasenreaktion zwischen einer fluorhaltigen Festphasenreaktionskomponente der Formel

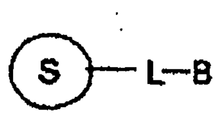

worin
Ⓢ für einen festen Träger, der ein oder mehr Fluoratome als internen Standard enthält, steht;
L fehlt oder für eine Brückengruppe, die gegebenenfalls ein oder mehrere Fluoratome enthält, steht und
B für eine funktionelle Gruppe steht, die zur Reaktion mit einem Reaktanten oder fluorhaltigen Reaktanten unter Bildung eines fluorhaltigen Festphasenreaktionsprodukts geeignet ist;
und einem Reaktanten oder fluorhaltigen Reaktanten zur Bildung eines fluorhaltigen Festphasenreaktionsprodukts initiiert;
(b) nach einem vorbestimmten Zeitintervall eine Probe der Festphasenreaktion entnimmt und ein $^{19}F$-NMR-Spektrum davon erhält und
(c) in dem $^{19}F$-NMR-Spektrum die $^{19}F$-Resonanz des fluorhaltigen Festphasenreaktionsprodukts mit der $^{19}F$-Resonanz des internen Standards vergleicht.

**2.** Verfahren nach Anspruch 1, bei dem man die $^{19}F$-NMR-Spektren unter Verwendung von Magic-Angle-Spinning erhält.

**3.** Verfahren nach Anspruch 1, bei dem L für eine Gruppe der Formel

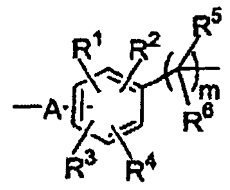

steht;

A für eine chemische Bindung steht oder unter

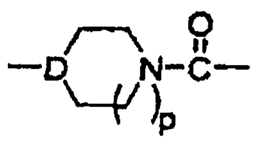,
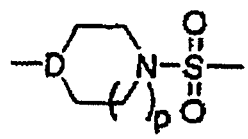,
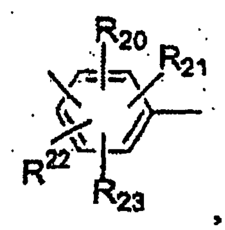,

-C(O)-, -YC(O)-, $-SO_2-$, $-NR^7SO_2-$, $-CHR^7-$, $-CHR^7Y-$ und $-CHR^7YC(O)(CH_2)_m$ ausgewählt ist;

B für Halogen, NHP, OW oder $SO_2Z$ steht;

D für CH oder N steht;

P für H oder eine Aminschutzgruppe steht;

W für H, NHP, $NPR^9$, $-NR^{10}C(O)$ Cl, $C(O)R^9$, $C(O)NR^{10}R^{11}$, $C(O)OR^9$, $SO_2R^9$ oder C(O)-Imidazol-1-yl steht;

Y für -O- oder $-NR^8-$ steht;

Z für Cl, OH, $OR_a$ oder $NR^9R^{12}$ steht;

$R^1$ für F steht, oder dann, wenn eine der Gruppen $R^{16}$, $R^{17}$, $R^{18}$ und $R^{19}$ für F steht, für H, Alkyl, Alkoxy, Halogen, CN oder $NO_2$ steht;

$R^2$, $R^3$ und $R^4$ unabhängig voneinander für H, Alkyl, Alkoxy, Halogen, CN oder $NO_2$ stehen;

$R^5$ und $R^6$ unabhängig voneinander für H, Alkyl, Phenyl oder mit einem oder mehreren unter Alkyl, Alkoxy, Halogen, Nitril und $-NO_2$ ausgewählten Substituenten substituiertes Phenyl steht;

oder eine der Gruppen $R^1$, $R^2$ und $R^4$ gemeinsam mit einer der Gruppen $R^5$ und $R^6$ und dem Kohlenstoffatom, an das sie gebunden sind, eine solche Ringstruktur bildet, daß L für eine Gruppe der Formel

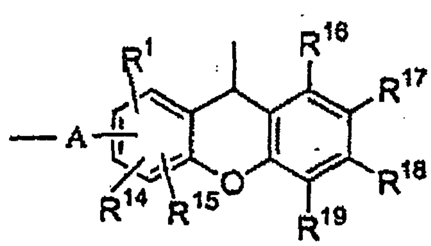

steht;

$R^7$ und $R^8$ unabhängig voneinander für H oder Niederalkyl stehen;

$R^9$ und $R^{13}$ unabhängig voneinander für ein Aliphat oder einen Aromaten stehen;

$R^{10}$ und $R^{11}$ unabhängig voneinander für H, ein Aliphat oder einen Aromaten stehen;

$R^{12}$ für $-CH_2R^{13}$ steht;

$R^{14}$, $R^{15}$, $R^{16}$, $R^{17}$, $R^{18}$, $R^{19}$, $R^{20}$, $R^{21}$, $R^{22}$ und $R^{23}$ unabhängig voneinander unter H, Alkyl, Alkoxy, Halogen, -CN oder $-NO_2$ ausgewählt sind;

m für 0 oder 1 steht und p für 0, 1 oder 2 steht.

**4.** Verfahren nach Anspruch 3, bei dem $R^1$, $R^2$, $R^3$ und $R^4$ für F stehen und eine der Gruppen $R^5$ und $R^6$ für H steht und die andere für H oder 2,4-Dimethoxyphenyl steht.

**5.** Verfahren nach Anspruch 4, bei dem B für F, OW oder $SO_2Z$ steht.

**6.** Verfahren nach Anspruch 5, bei dem A für Phenylen, -C(O)-, -YC(O)-, $-SO_2-$, $-NR^7SO_2-$ oder $-CHR^7O-$ steht.

**Revendications**

**1.** Procédé de quantification d'une réaction en phase solide comprenant :

(a) l'initiation d'une réaction en phase solide entre un composant de la réaction en phase solide contenant du fluor de formule

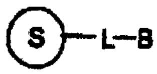

dans laquelle
ⓢ est un support solide contenant un ou plusieurs atomes de fluor servant d'étalon interne ;
L est absent ou bien est un groupe de liaison contenant éventuellement un ou plusieurs atomes de fluor ; et
B est un groupe fonctionnel approprié pour réaction avec un réactif ou un réactif contenant du fluor en vue de former un produit de réaction en phase solide contenant du fluor
et un réactif ou un réactif contenant du fluor en vue de former un produit de réaction en phase solide contenant du fluor ;
(b) le prélèvement d'un échantillon de ladite réaction en phase solide après un intervalle de temps prédéterminé et l'obtention d'un spectre de RMN $^{19}F$ dudit échantillon ; et
(c) la comparaison, dans ledit spectre de RMN $^{19}F$, de la résonance du fluor-19 du produit de réaction en phase solide contenant du fluor à la résonance du fluor-19 dudit étalon interne.

**2.** Procédé selon la revendication 1 dans lequel les spectres de RMN $^{19}F$ sont obtenus en utilisant la rotation à l'angle magique.

**3.** Procédé selon la revendication 1 dans lequel
L représente un groupe de formule

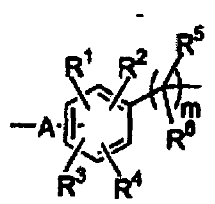
;

A représente une liaison chimique ou bien est choisi parmi

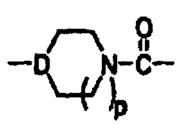
,
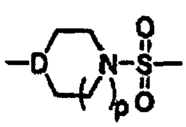
,
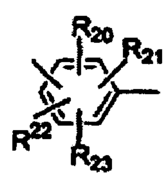
,

-C(O)-, -YC(O)-, $-SO_2-$, $-NR^7SO_2-$, $-CHR^7-$, $-CHR^7Y-$ et $-CHR^7YC(O)(CH_2)_m-$ ;
B représente un halogène, NHP, OW ou $SO_2Z$ ;
D représente CH ou N ;
P représente H ou un groupe protecteur d'amine;
W représente H, NHP, $NPR^9$, $NR^{10}C(O)Cl$, $C(O)R^9$, $C(O)NR^{10}R^{11}$, $C(O)OR^9$, $SO_2R^9$ ou un groupe C(O)-imidazol-1-yle ;
Y représente -O- ou $-NR^8-$;
Z représente Cl, OH, $OR_a$ ou $NR^9R^{12}$ ;
$R^1$ représente F, ou quand l'un de $R^{16}$, $R^{17}$, $R^{18}$ et $R^{19}$ représente F, $R^1$ représente H, un groupe alkyle, alcoxy,

halogéno, CN ou $NO_2$ ;
$R^2$, $R^3$ et $R^4$ représentent indépendamment H, un groupe alkyle, alcoxy, halogéno, CN ou $NO_2$ ;
$R^5$ et $R^6$ représentent indépendamment H, un groupe alkyle, phényle ou phényle portant un ou plusieurs substituants choisis parmi les groupes alkyle, alcoxy, halogéno, nitrile et $NO_2$ ;
ou l'un de $R^1$, $R^2$ et $R^4$, conjointement avec l' un de $R^5$ et $R^6$ et les atomes de carbone auxquels ils sont attachés, forme une structure cyclique telle que L représente un groupe de formule

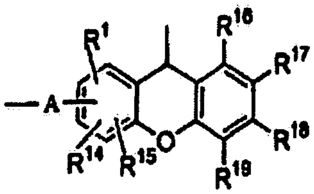

;

$R^7$ et $R^8$ représentent indépendamment H ou un groupe alkyle inférieur ;
$R^9$ et $R^{13}$ représentent indépendamment un groupe aliphatique ou aromatique ;
$R^{10}$ et $R^{11}$ représentent indépendamment H, un groupe aliphatique ou aromatique;
$R^{12}$ représente $-CH_2R^{13}$;
$R^{14}$, $R^{15}$, $R^{16}$, $R^{17}$, $R^{18}$, $R^{19}$, $R^{20}$, $R^{21}$ , $R^{22}$ et $R^{23}$ sont indépendamment choisis parmi H, les groupes alkyle, alcoxy, halogéno, CN et $NO_2$;
m vaut 0 ou 1 ; et p vaut 0, 1 ou 2.

**4.** Procédé selon la revendication 3 dans lequel $R^1$, $R^2$, $R^3$ et $R^4$ représentent F ; et l' un de $R^5$ et $R^6$ représente H et l'autre de $R^5$ et $R^6$ représente H ou un groupe 2,4-diméthoxyphényle.

**5.** Procédé selon la revendication 4 dans lequel B représente F, OW ou $SO_2Z$ .

**6.** Procédé selon la revendication 5 dans lequel A représente un groupe phénylène, -C(O)-, -YC(O)-, $-SO_2-$, $-NR^7SO_2-$ ou $-CHR^7O-$.

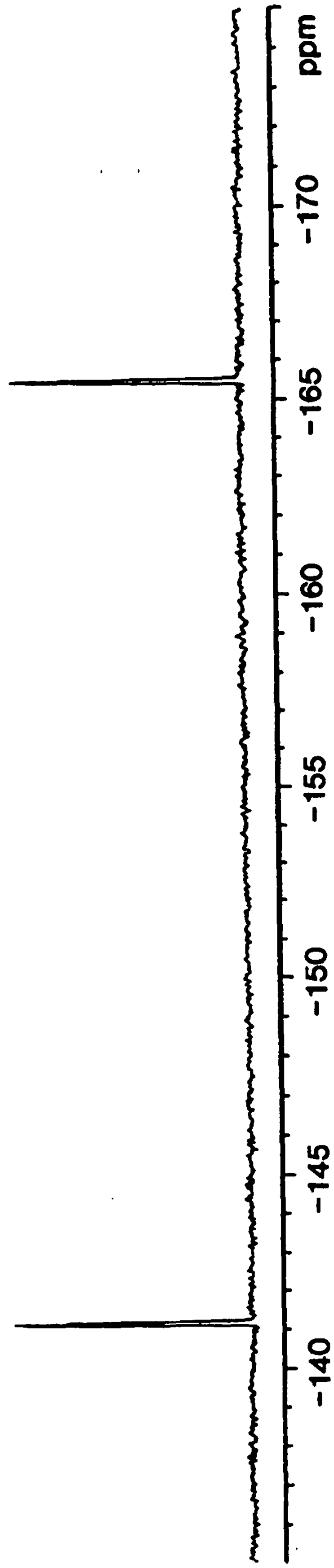


FIG. 1

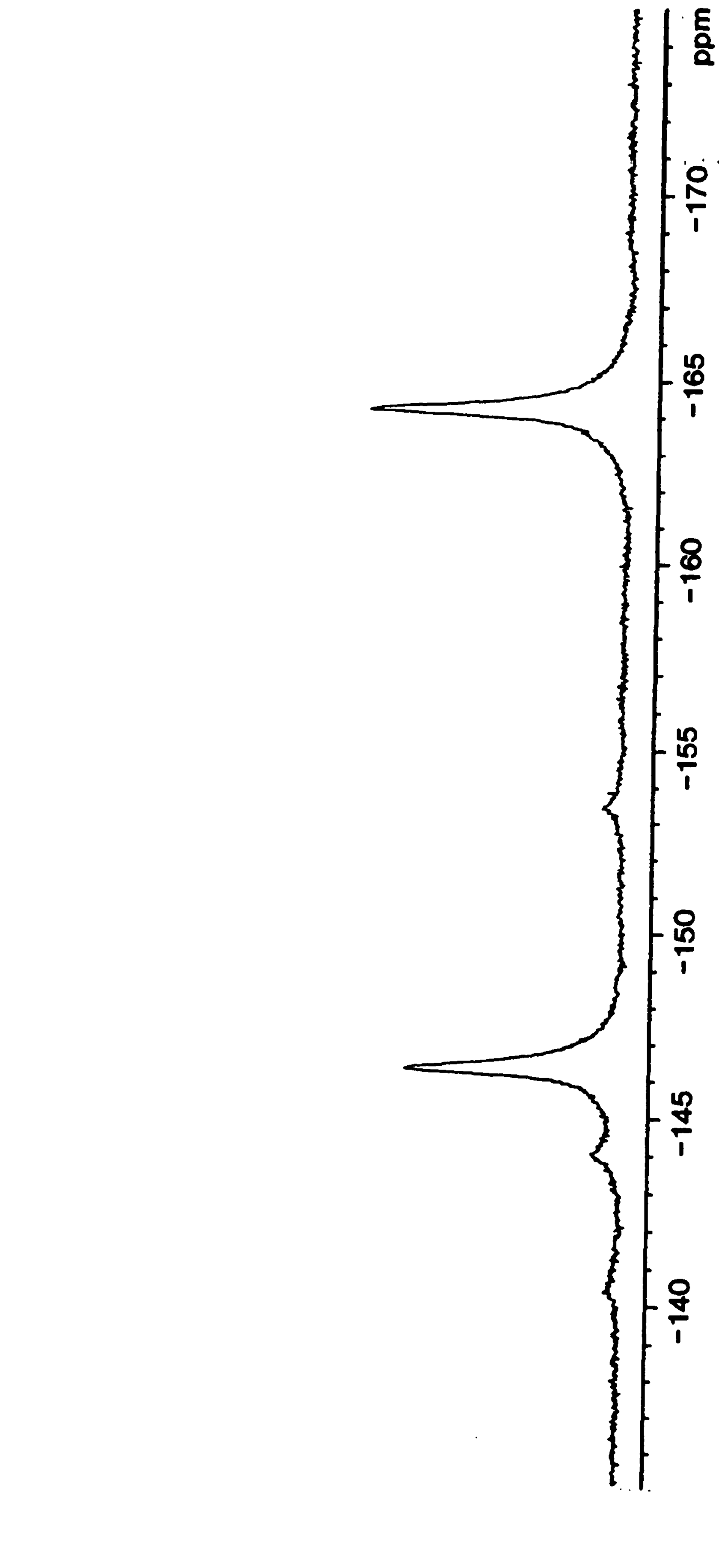


FIG. 2

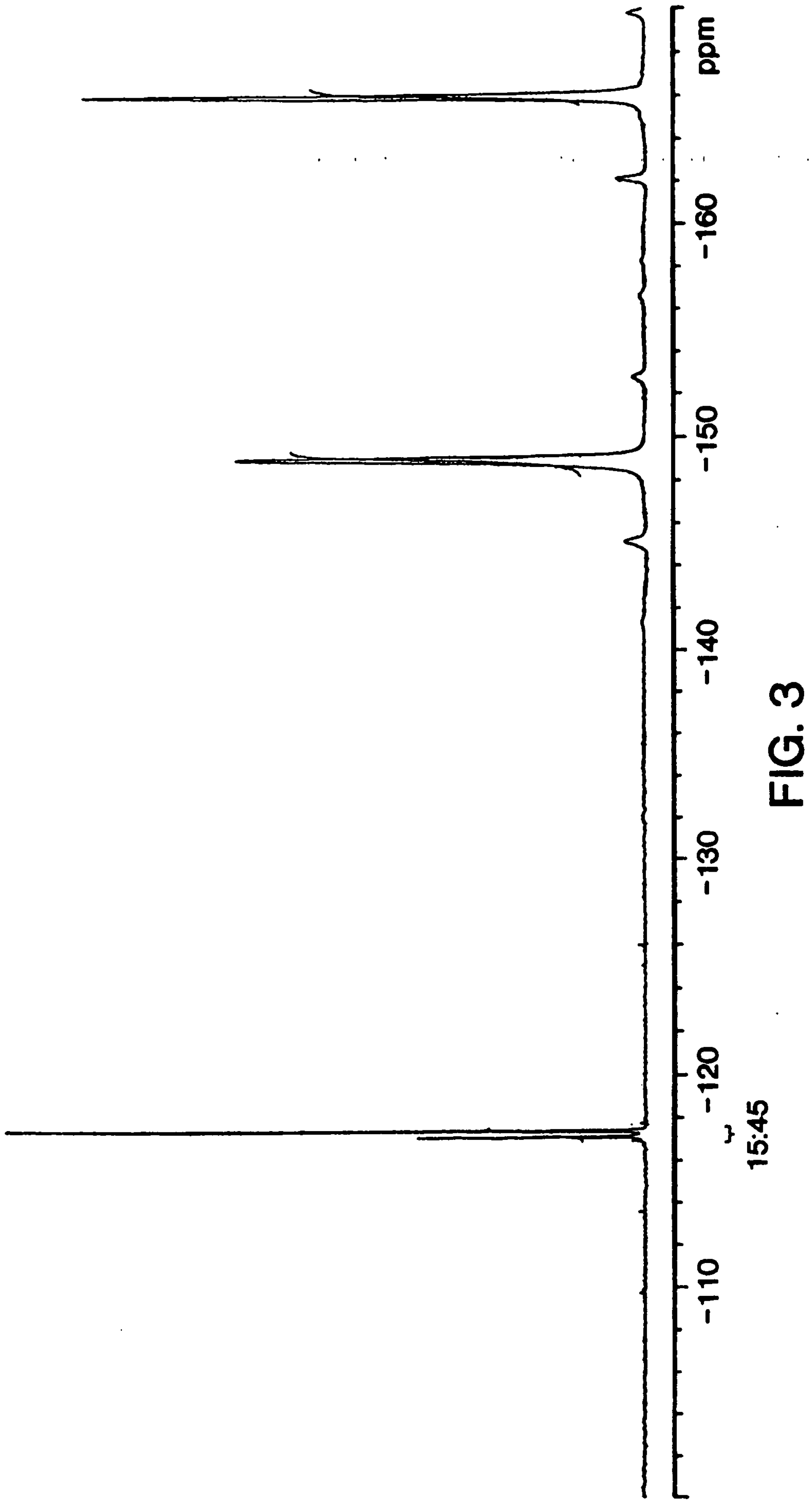


FIG. 3

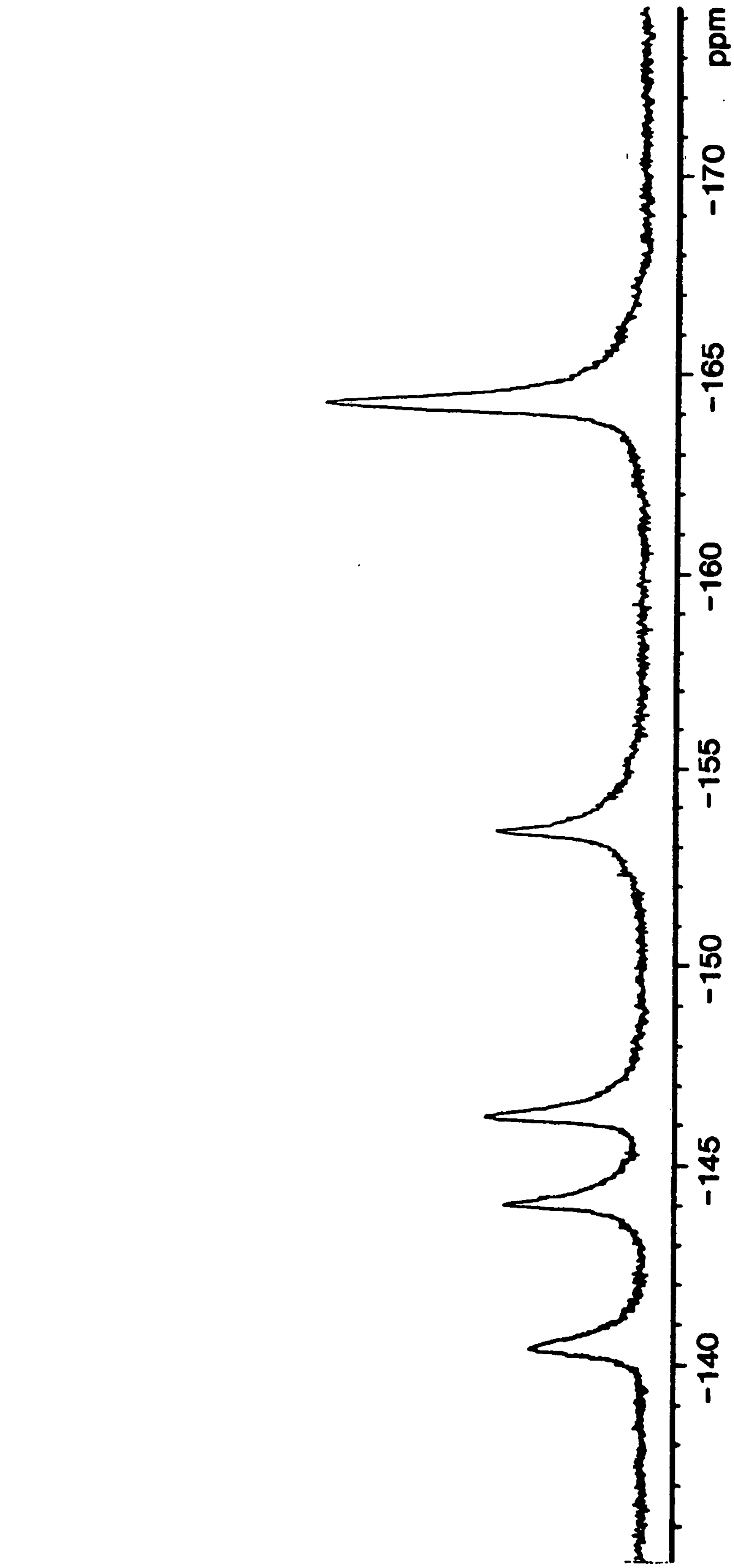


FIG. 4

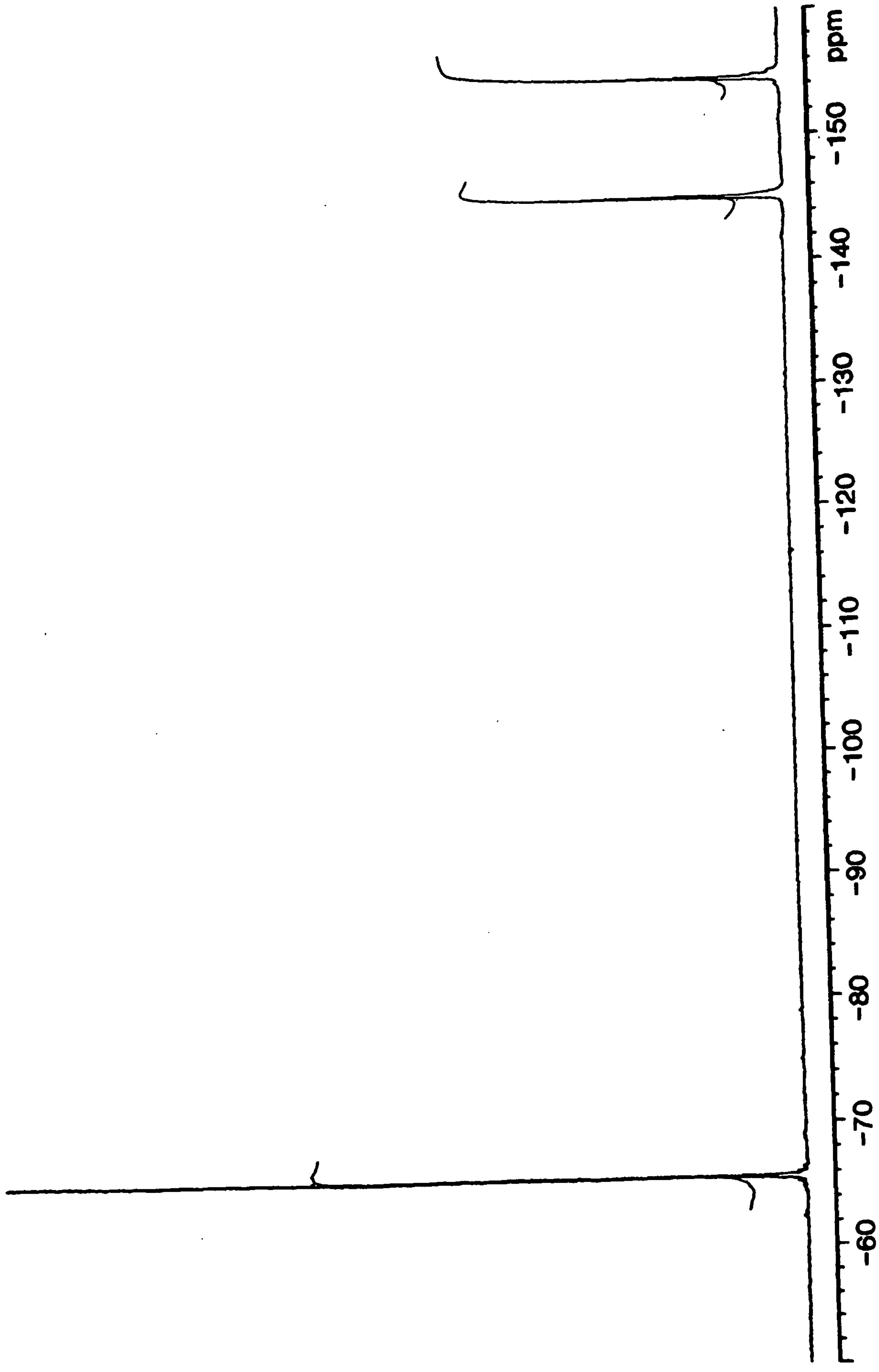


FIG. 5

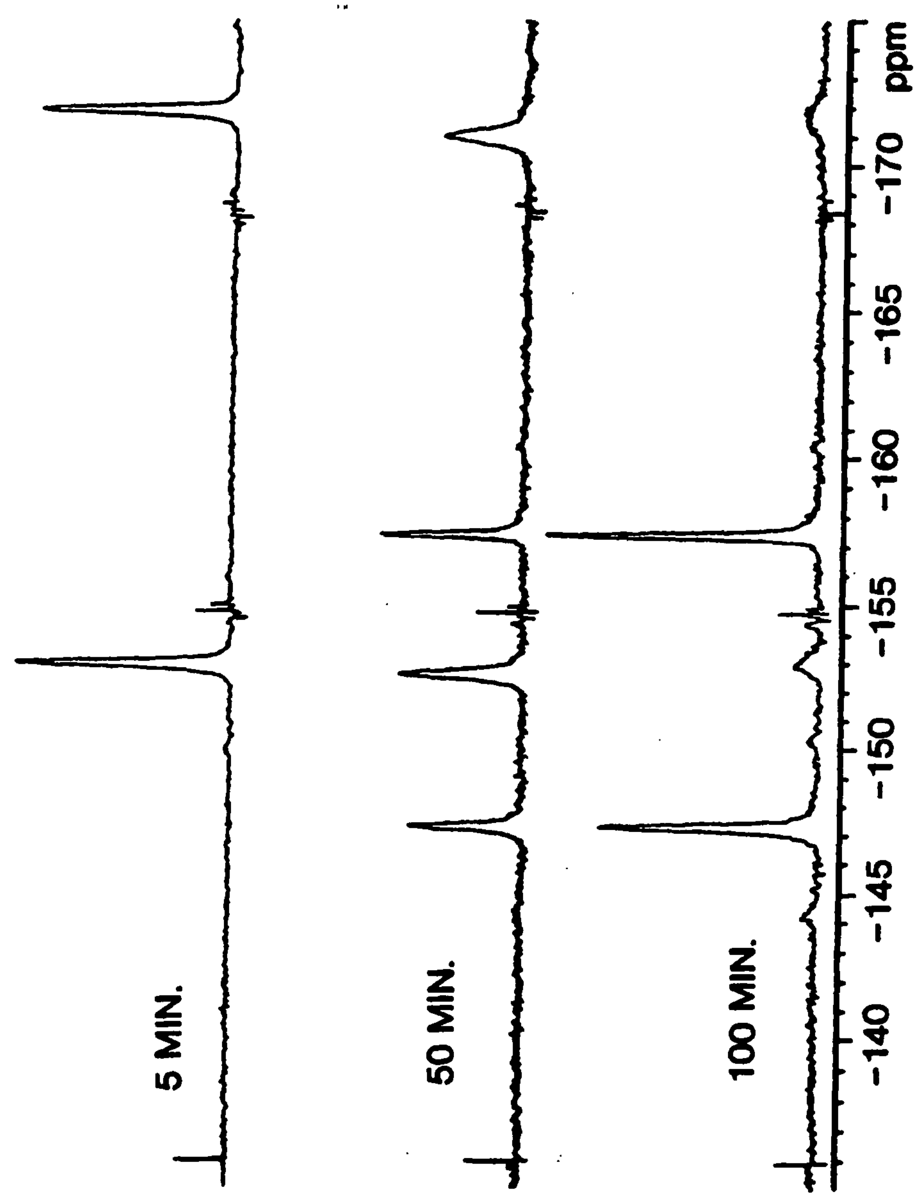


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9703931 A
- US 9723920 W
- US 09055898 P


### Non-patent literature cited in the description


- **J.M. STEWART ; J.D. YOUNG.** Solid-phase Peptide Synthesis. Pierce Chemical Co, 1984
- **J. MEIENHOFER.** Hormonal Proteins and Peptides. Academic Press, 1973, vol. 2, 46
- **E. ATHERTON ; R.C. SHEPPARD.** Solid-phase Peptide Synthesis: A Practical Approach. IRL Press at Oxford University Press, 1989
- **LEZNOFF, C.C.** *Acc. Chem. Res.,* 1978, vol. 11, 327-333
- **A. AKELAH ; D.C. SHERRINGTON.** Application of Functionalized Polymers in Organic Synthesis. *Chem Rev.,* 1981, vol. 81, 557-587
- **W. T. FORD ; E. C. BLOSSEY.** Polymer Supported Reagents, Polymer supported Catalysts, and Polymer Supported Coupling Reactions, in Preparative Chemistry using Supported Reagents. Academic Press, Inc, 1987, 193-212
- **J. M. J. FRECHET et al.** *J. Org. Chem.,* 1978, vol. 43, 2618
- **G. CAINELLI et al.** *J. Am. Chem. Soc.,* 1976, vol. 98, 6737
- **J. M. J. FRECHET et al.** *J. Macromol. Sci. Chem.,* 1977, vol. 11, 507
- **D. C. SHERRINGTON et al.** *Eur. Polym. J.,* 1977, vol. 13, 73
- **J. M. J. FRECHET et al.** *Macromolecules,* 1975, vol. 8, 130
- **C. R. HARRISON et al.** *J. Chem. Soc. Chem. Commun.,* 1974, 1009
- **M. B. SHAMBHU et al.** *Tet. Lett.,* 1973, 1627
- **M. B. SHAMBHU et al.** *J. Chem. Soc. Chem. Commun.,* 1974, 619
- **S. V. MCKINLEY et al.** *J. Chem. Soc. Chem. Commun.,* 1972, 134
- **F. BALKENHOHL et al.** Angew. Chem. Int. 1996, vol. 35, 2288-2337
- **L.A. THOMPSON et al.** *Chem Rev.,* 1996, vol. 96, 555-600
- **SVENSSON et al.** *Tetrahedron Lett.,* 1996, vol. 37, 7649
- **SHAPIRO et al.** *Tetrahedron Lett.,* 1996, vol. 37, 4671
- **SVENSSON et al.** *Tetrahedron Lett.,* 1998, vol. 39, 7193-7196
- **STONES et al.** *Tetrahedron Lett.,* 1998, vol. 39, 4875-4878
- **KOENIG, J.L.** Spectroscopy of Polymers. American Chemical Society, 1992
- **FITCH et al.** *J. Org. Chem.,* 1994, vol. 59, 7955
- **T.H. GREENE ; P.G.M. WUTS.** Protective Groups in Organic Synthesis. John Wiley & Sons, 1991
- **MITSUNOBU, O.** *Synthesis,* 1981, 1
- **FELDMAN et al.** *J. Org. Chem.,* 1991, vol. 56 (26), 7350-7354